# EUROPEAN PATENT SPECIFICATION

(11) **EP 3 000 699 B1**
(45) Date of publication and mention of the grant of the patent: **01.02.2017**
(21) Application number: 15159427.2
(22) Date of filing: 17.03.2015
(51) Int. Cl.: B62J 6/02, B62J 17/02, B62J 6/00

(54) **SADDLE-RIDING TYPE VEHICLE**
SATTELFAHRZEUG
VÉHICULE DE TYPE À ENFOURCHER

(30) Priority: 26.09.2014 JP 2014196206
(43) Date of publication of application: 30.03.2016
(73) Proprietor: Yamaha Hatsudoki Kabushiki Kaisha, Iwata-shi, Shizuoka 438-8501 (JP)
(72) Inventor: Koyanagi, Daisuke, Iwata-shi, Shizuoka 438-8501 (JP)
(74) Representative: Grünecker Patent- und Rechtsanwälte PartG mbB

(56) References cited:
- EP-A1- 2 669 166
- EP-A2- 2 644 484
- TW-A- 200 523 163

## Description

The present invention relates to a saddle-riding type vehicle.

Some saddle-riding type vehicles, such as a vehicle described in European Patent Application Publication No. EP2644484, include a structure in which a headlamp is mounted to a front cover and right and left lamps are disposed laterally outside the headlamp in the vehicle width direction. In this type of saddle-riding type vehicle, the front cover is partially located between the headlamp and the right lamp and between the headlamp and the left lamp. Thus, the headlamp and the right and left lamps can be better differentiated from each other. Further, Chinese Patent Application Publication No. CN103963880 also describes a headlamp and right and left lamps that are disposed in similar positions to those described in the Publication No. EP2644484.

### SUMMARY OF INVENTION

In the aforementioned saddle-riding type vehicle, the headlamp and the right and left lamps are disposed in alignment with each other in the vehicle width direction. Thus, in attempting to enlarge either the headlamp or the right and left lamps, the vehicle is inevitably enlarged in the vehicle width direction. Especially, the front cover is partially disposed between the headlamp and the right lamp and between the headlamp and the left lamp in order to achieve better differentiation between the headlamp and the right and left lamps. Hence, the vehicle is inevitably further enlarged.

Incidentally, the inventor of the present application was motivated to make each of the right and left lamps visible at a larger angle when each lamp is seen from a position located on the laterally opposite side of the respective lamp. In other words, the inventor was motivated to make the left lamp visible at a larger angle when the left lamp is seen from the right side of the vehicle as well as from the left side of the vehicle. Likewise, the inventor was motivated to make the right lamp visible at a larger angle when the right lamp is seen from the left side of the vehicle as well as from the right side of the vehicle.

As shown in FIG. 19, the aforementioned Publication Nos. EP2644484 and CN103963880 describe a structure that a right lamp 101 and a left lamp 102 are mounted to the front end portion of a front cover. Thus, it is expected that each of the right and left lamps 101 and 102 is visible at a large angle when seen from a position located on the laterally opposite side of the respective lamp 101, 102. In other words, it is expected that the right lamp 101 is visible at a larger angle (see e.g., an angle θa) not only from a position on the right side of the vehicle but also from a position on the left side of the vehicle. Similarly to the right lamp 101, it is expected that the left lamp 102 is visible at a larger angle not only from a position on the left side of the vehicle but also from a position on the right side of the vehicle.

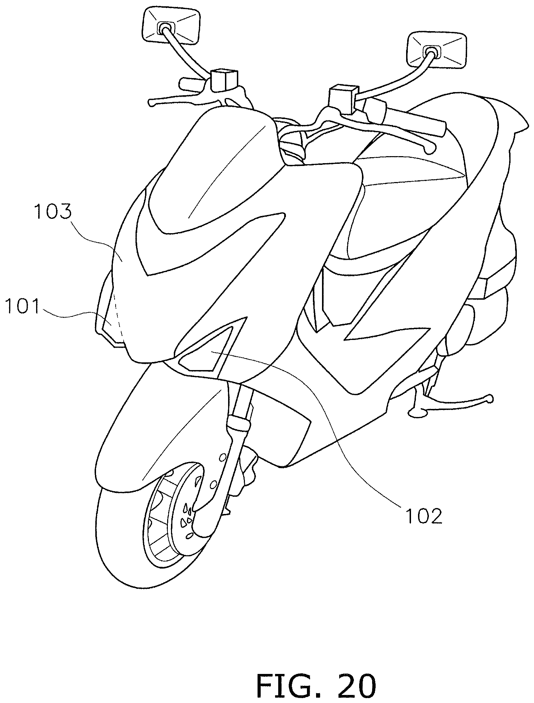

However, a headlamp 103 herein protrudes forward. Thus, the headlamp 103 and each of the right and left lamps 101 and 102 overlap with each other when each lamp 101, 102 is seen from a position located on the laterally opposite side of the respective lamp 101, 102. This may result in degradation in differentiation between the headlamp 103 and each of the right and left lamps 101 and 102. For example, as shown in FIG. 20, the right lamp 101 and the headlamp 103 are seen as overlapping with each other when seen from a position located left forward of the vehicle. Thus, a boundary between the right lamp 101 and the headlamp 103 cannot be easily recognized. This may result in degradation in differentiation between the right lamp 101 and the headlamp 103. Likewise, the left lamp 102 and the headlamp 103 are seen as overlapping with each other when seen from a position located right forward of the vehicle. This may result in degradation in differentiation between the left lamp 102 and the headlamp 103.

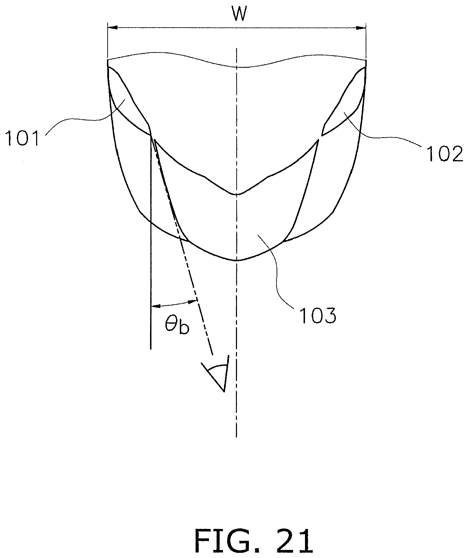

As shown in FIG. 21, when the headlamp 103 is displaced from the right and left lamps 101 and 102 in the vehicle back-and-forth direction by disposing the right and left lamps 101 and 102 on the positions located rearward of the headlamp 103, it is possible to achieve compactness in width directional size of the vehicle, and also, it is possible to achieve enlargement of the headlamp 103. In the structure, however, the right and left lamps 101 and 102 are disposed rearward of the headlamp 103. This may cause a situation that each of the right and left lamps 101 and 102 is visible only at a small angle (see e.g., an angle θb) when seen from a position located on the laterally opposite side of the respective lamp 101, 102.

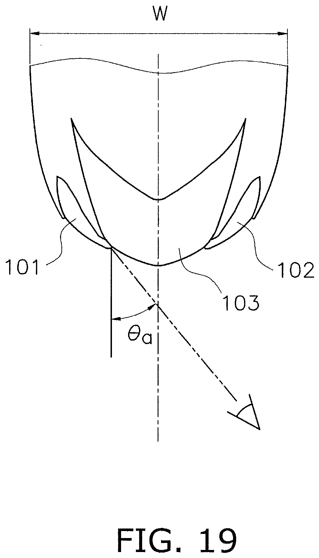

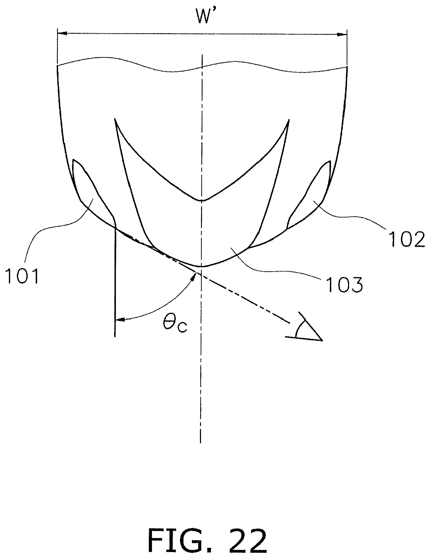

By contrast, as shown in FIG. 22, each of the right and left lamps 101 and 102 is visible at a larger angle (see e.g., an angle θc) when being disposed further laterally outward in the vehicle width direction. Thus, each of the right and left lamps 101 and 102 is better visible from a position located on the laterally opposite side of the respective lamp 101 and 102. Further, the headlamp 103 and each of the right and left lamps 101 and 102 are separated further away from each other in the vehicle width direction. Put differently, a larger portion of the front cover is disposed between the headlamp 103 and each of the right and left lamps 101 and 102. With the structure, it is expected that the front cover is visible between the headlamp 103 and each of the right and left lamps 101 and 102 at a large angle when each of the right and left lamps 101 and 102 is seen from a position located on the laterally opposite side thereof. This may result in better differentiation between the headlamp 103 and each of the right and left lamps 101 and 102 when each of the right and left lamps 101 and 102 is seen from a position located on the laterally opposite side thereof. For example, even when seen at an angle shown in FIG. 20, the front cover may be partially visible between the headlamp 103 and the right lamp 101, and this may result in better differentiation between the headlamp 103 and the right lamp 101. In the structure, however, there is a drawback that the vehicle is inevitably enlarged in the vehicle width direction as shown in FIGS. 19 and 21 (see a width W) and in FIG. 22 (see a width W').

It is an object of the present invention to provide a saddle-riding type vehicle whereby it is possible to simultaneously achieve enlargement of either a headlamp or right and left lamps and compactness in width directional size of the vehicle, and further, it is possible to achieve better differentiation between the headlamp and the right and left lamps. Such an object is achieved by a saddle-riding type vehicle according to claim 1.

A saddle-riding type vehicle according to an aspect of the present invention includes a head pipe, a front fork device, a front cover, a left side cover, a right side cover, a headlamp, a left lamp and a right lamp. The front fork device includes a front fork portion and a front wheel. The front fork portion is turnably supported by the head pipe. The front wheel is supported by the front fork portion.

The front cover is disposed in front of the head pipe and is disposed over the front wheel. The left side cover downwardly extends from the front cover and is disposed laterally leftward of the front wheel in a vehicle front view. The right side cover downwardly extends from the front cover and is disposed laterally rightward of the front wheel in the vehicle front view.

The headlamp is mounted to the front cover. The left lamp is disposed laterally leftward of at least a portion of the headlamp in the vehicle front view. The left lamp is also at least partially disposed lower than a lower end of the headlamp. The right lamp is disposed laterally rightward of at least a portion of the headlamp in the vehicle front view. The right lamp is also at least partially disposed lower than the lower end of the headlamp.

The headlamp includes a headlamp light source and a headlamp cover enabling a light ray emitted from the headlamp light source to pass therethrough. The left lamp includes a left lamp light source and a left lamp cover enabling a light ray emitted from the left lamp light source to pass therethrough. The right lamp includes a right lamp light source and a right lamp cover enabling a light ray emitted from the right lamp light source to pass therethrough. The front cover includes a headlamp opening. The headlamp opening exposes the headlamp cover therethrough.

The front cover, the left side cover and the right side cover produce a space for rotating of the front fork device. An inner lateral portion of the left lamp cover and an inner lateral portion of the right lamp cover are exposed to the space for rotating of the front fork device. A lower edge portion of the headlamp cover is disposed rearward of a front edge of a lower edge portion of the headlamp opening.

A first viewpoint is defined as a viewpoint that is located laterally leftward of a vehicle center in a vehicle width direction and is located forward of and higher than the headlamp and the right lamp. The lower edge portion of the headlamp opening is visible between the right lamp cover and the headlamp cover in a view from the first viewpoint. A second viewpoint is defined as a viewpoint that is located laterally rightward of a vehicle center in the vehicle width direction and is located forward of and higher than the headlamp and the left lamp. The lower edge portion of the headlamp opening is visible between the left lamp cover and the headlamp cover in a view from the second viewpoint.

The saddle-riding type vehicle according to the present aspect includes a structure that at least a portion of the left lamp and at least a portion of the right lamp are disposed below the lower end of the headlamp. In other words, the headlamp and the right and left lamps are disposed so as to be displaced from each other in the up-and-down direction. Thus, width directional enlargement of the vehicle can be inhibited even when the headlamp or the right and left lamps is/are enlarged.

Further, the inner lateral portion of the left lamp cover and that of the right lamp cover are exposed to the space for rotating of the front fork device. Thus, each of the inner lateral portions of the right and left lamp covers is visible at a larger angle when seen from a position located on the laterally opposite side thereof. Thus, the space for rotating of the front fork device can be utilized for viewing each of the right and left lamps from the position located on the laterally opposite side thereof by disposing at least a portion of the left lamp and at least a portion of the right lamp so as to be below the lower end of the headlamp. Accordingly, each of the right and left lamps is visible at a large angle from the position located on the laterally opposite side thereof, and further, width directional enlargement of the vehicle can be inhibited.

Incidentally in many saddle-riding type vehicles, the headlamp and the right and left lamps are disposed in low positions when seen from a passer-by and so forth in the surrounding of the vehicle. Therefore, the inventor of the present invention was motivated to make each of the right and left lamps visible in a view from a viewpoint that is located on the laterally opposite side of each lamp and is also located forward of and above the respective lamp. However, when at least a portion of the left lamp and at least a portion of the right lamp are disposed below the lower end of the headlamp, there is a high potential that a lens of the headlamp overlaps with each of the right and left lamps in the view from the aforementioned viewpoint. Thus, degradation in differentiation between the headlamp and the right and left lamps is concerned.

Further, the inner lateral portions of the right and left lamps are exposed to the space for rotating of the front fork device. Thus, the right and left lamps are disposed closer to the headlamp in the vehicle width direction. Due to the structure, there is a high potential that the lens of the headlamp overlaps with each of the right and left lamps in the view from the aforementioned viewpoint. Thus, degradation in differentiation between the headlamp and the right and left lamps is concerned. Put differently, there is a high potential that the lens of the headlamp overlaps each of the right and left lamps in the view from the aforementioned viewpoint when inhibition of width directional enlargement of the vehicle is intended and further the space for rotating of the front fork device is utilized for viewing each of the right and left lamps from the laterally opposite side thereof. Therefore, degradation in differentiation between the headlamp and the right and left lamps is concerned.

By contrast, in the saddle-riding type vehicle according to the present aspect, the lower edge portion of the headlamp cover is disposed rearward of the front edge of the lower edge portion of the headlamp opening. Thus, there is a low potential that the headlamp cover overlaps each of the right and left lamp covers in the view from the first viewpoint or the second viewpoint. Further, the lower edge portion of the headlamp opening is visible between the right lamp cover and the headlamp cover in the view from the first viewpoint. The lower edge portion of the headlamp opening is also visible between the left lamp cover and the headlamp cover in the view from the second viewpoint. Thus, the right lamp cover and the headlamp cover can be better differentiated from each other by the lower edge portion of the headlamp opening that is visible between the right lamp cover and the headlamp cover. Likewise, the left lamp cover and the headlamp cover can be better differentiated from each other by the lower edge portion of the headlamp opening that is visible between the left lamp cover and the headlamp cover.

As described above, in the saddle-riding type vehicle according to the present invention, it is possible to simultaneously achieve enlargement of either the headlamp or the right and left lamps and compactness in width directional size of the vehicle, and further, it is possible to achieve better differentiation between the headlamp and the right and left lamps.

The right lamp cover and the headlamp cover are preferably divided through the lower edge portion of the headlamp opening in the view from the first viewpoint. Further, the left lamp cover and the headlamp cover are preferably divided through the lower edge portion of the headlamp opening in the view from the second viewpoint. In the structure, it is possible to achieve better differentiation between the right lamp cover and the headlamp cover. Likewise, it is possible to achieve better differentiation between the left lamp cover and the headlamp cover.

A vehicle up-and-down directional dimension of the left lamp cover is preferably larger than a vehicle width directional dimension of the left lamp cover in the vehicle front view. Further, a vehicle up-and-down directional dimension of the right lamp cover is preferably larger than a vehicle width directional dimension of the right lamp cover in the vehicle front view. In the structure, each of the right and left lamp covers is elongated in the longitudinal direction. Thus, it is possible to achieve compactness in width directional dimension of the vehicle.

The lower edge portion of the headlamp opening preferably includes a left lower edge portion and a right lower edge portion. The left lower edge portion extends upward and laterally leftward in the vehicle front view. The right lower edge portion extends upward and laterally rightward in the vehicle front view. Further, the right lower edge portion is preferably visible between the right lamp cover and the headlamp cover in the view from the first viewpoint. Further, the left lower edge portion is preferably visible between the left lamp cover and the headlamp cover in the view from the second viewpoint. In the structure, the right and left lower edge portions can be elongated. It is thereby possible to achieve better differentiation between the headlamp cover and the right and left lamp covers.

The front cover preferably includes a left recess and a right recess. The left recess is located under the left lower edge portion. The right recess is located under the right lower edge portion. In the structure, it is possible to compactly form the front portion of the vehicle, and further, to achieve better differentiation between the headlamp cover and the right and left lamp covers.

The left lamp cover preferably includes a left lamp cover upper portion and a left lamp cover lower portion. The left lamp cover lower portion downwardly extends from the left lamp cover upper portion. On the other hand, the right lamp cover preferably includes a right lamp cover upper portion and a right lamp cover lower portion. The right lamp cover lower portion downwardly extends from the right lamp cover upper portion. Further, the lower edge portion of the headlamp opening preferably overlaps with a portion of the right lamp cover lower portion in the view from the first viewpoint. Yet further, the lower edge portion of the headlamp opening preferably overlaps with a portion of the left lamp cover lower portion in the view from the second viewpoint. In the structure, due to overlapping between the lower edge portion and the downwardly extending portions of the right and left lamp covers, it is possible to achieve better differentiation between the headlamp cover and the right and left lamp covers.

The lower edge portion of the headlamp opening preferably overlaps with at least a portion of the inner lateral portion of the right lamp cover in the view from the first viewpoint. Further, the lower edge portion of the headlamp opening preferably overlaps with at least a portion of the inner lateral portion of the left lamp cover in the view from the second viewpoint. In the structure, it is possible to make each of the right and left lamps visible at a large angle when seen from a position located on the laterally opposite side of the respective lamp, and also, it is possible to achieve better differentiation between the headlamp cover and the right and left lamp covers.

The headlamp cover preferably includes a headlamp cover upper portion and a headlamp cover lower portion. The headlamp cover lower portion has a width smaller than a width of the headlamp cover upper portion in the vehicle front view. In the structure, it is possible to partially enlarge the front cover, i.e., the portion located between the headlamp cover lower portion and each of the right and left lamp covers, due to the headlamp cover lower portion having a small width. Accordingly, it is possible to achieve much better differentiation between the headlamp cover and the right and left lamp covers. Alternatively, the right and left lamp covers can be disposed more laterally inward due to the headlamp cover lower portion having a small width. Accordingly, the right and left lamp covers can be compactly disposed in the width direction.

An upper end of the left lamp cover and an upper end of the right lamp cover are preferably disposed higher than a lower end of the headlamp cover lower portion in the vehicle front view. In the structure, the right and left lamp covers can be compactly disposed in the width direction by disposing the right and left lamp covers so as to overlap with the headlamp cover lower portion in the height direction.

The headlamp light source preferably includes a first light source, a second light source and a third light source. The first light source and the second light source are preferably disposed so as to face to a first space produced rearward of the headlamp cover upper portion. The third light source is preferably disposed so as to face to a second space produced rearward of the headlamp cover lower portion. In the structure, it is possible to easily form the headlamp cover with a shape that the headlamp cover lower portion includes a width smaller than that of the headlamp cover upper portion in the vehicle front view, and also, it is possible to reliably obtain a sufficient amount of light.

The headlamp preferably includes a substrate dividing the first space and the second space. Further, the first light source and the second light source are preferably attached to an upper surface of the substrate. Yet further, the third light source is preferably attached to a lower surface of the substrate. In the structure, the first to third light sources are attached to the same substrate, and thereby, enhancement in productivity and cost reduction can be achieved. Further, compared to a structure that the first to third light sources are disposed on the same surface of the substrate so as to be aligned in the vehicle width direction, reduction in vehicle width directional size of the internal structure of the headlamp can be achieved in the herein described structure that the first light source and the second light source are attached to the upper surface of the substrate whereas the third light source is attached to the lower surface of the substrate.

According to the present invention, it is possible to provide a saddle-riding type vehicle whereby it is possible to simultaneously achieve enlargement of either a headlamp or right and left lamps and compactness in width directional size of the vehicle, and further, it is possible to achieve better differentiation between the headlamp and the right and left lamps.

### BRIEF DESCRIPTION OF THE DRAWINGS

Referring now to the attached drawings which form a portion of this original disclosure:
FIG. 1 is a side view of a saddle-riding type vehicle;
FIG. 2 is a front view of the saddle-riding type vehicle;
FIG. 3 is an enlarged front view of the saddle-riding type vehicle;
FIG. 4 is a cross-sectional view of FIG. 3 taken along a cutaway line IV-IV;
FIG. 5 is a cross-sectional view of FIG. 3 taken along a cutaway line V-V;
FIG. 6 is a cross-sectional view of FIG. 3 taken along a cutaway line VI-VI;
FIG. 7 is a view of a front portion of the saddle-riding type vehicle as seen from obliquely below;
FIG. 8 is a plan view showing exemplary positions of a first viewpoint;
FIG. 9 is a side view showing the exemplary positions of the first viewpoint;
FIG. 10 is a view of the saddle-riding type vehicle where an angle of the first viewpoint is set to be 20 degrees;
FIG. 11 is a view of the saddle-riding type vehicle where the angle of the first viewpoint is set to be 35 degrees;
FIG. 12 is a view of the saddle-riding type vehicle where the angle of the first viewpoint is set to be 40 degrees;
FIG. 13 is a view of the saddle-riding type vehicle where the angle of the first viewpoint is set to be 45 degrees;
FIG. 14 is a plan view showing exemplary positions of a second viewpoint;
FIG. 15 is a view of the saddle-riding type vehicle where the angle of the second viewpoint is set to be 20 degrees;
FIG. 16 is a view of the saddle-riding type vehicle where the angle of the second viewpoint is set to be 35 degrees;
FIG. 17 is a view of the saddle-riding type vehicle where the angle of the second viewpoint is set to be 40 degrees;
FIG. 18 is a view of the saddle-riding type vehicle where the angle of the second viewpoint is set to be 45 degrees;
FIG. 19 is a diagram for explaining problems of well-known arts;
FIG. 20 is a diagram for explaining the problems of the well-known arts;
FIG. 21 is a diagram for explaining the problems of the well-known arts; and
FIG. 22 is a diagram for explaining the problems of the well-known arts.

### DETAILED DESCRIPTION OF THE EMBODIMENTS

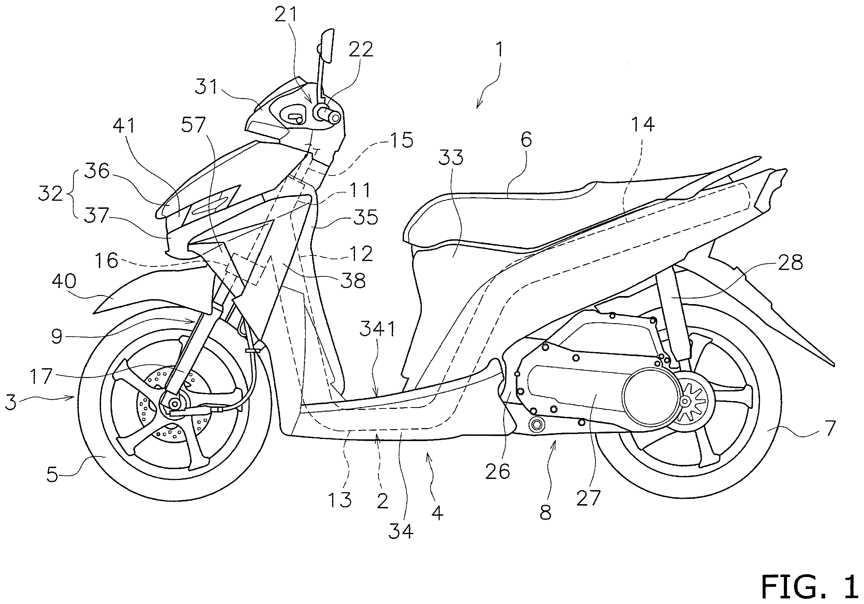

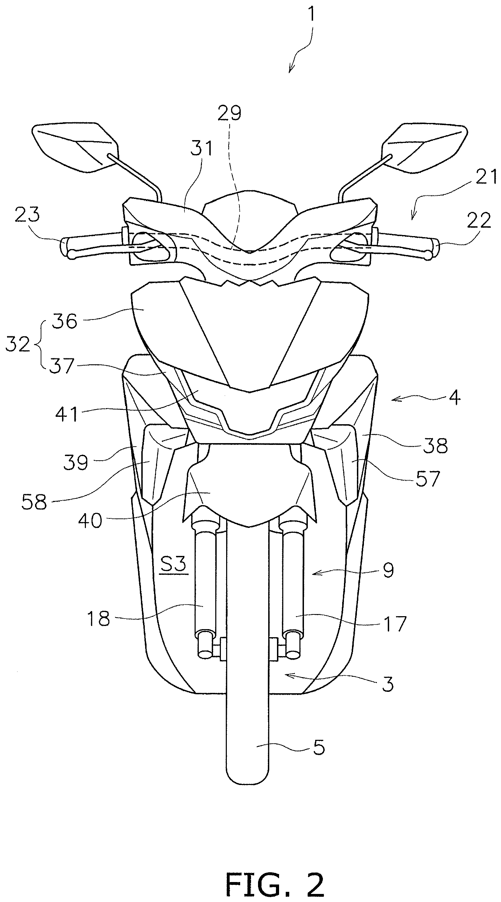

A saddle-riding type vehicle 1 according to an exemplary embodiment will be hereinafter explained with reference to the attached drawings. FIG. 1 is a side view of the saddle-riding type vehicle 1. FIG. 2 is a front view of the saddle-riding type vehicle 1. The saddle-riding type vehicle 1 according to the present exemplary embodiment is a scooter-type vehicle. As shown in FIG. 1, the saddle-riding type vehicle 1 includes a vehicle body frame 2, a front fork device 3, a vehicle body cover 4, a seat 6, a rear wheel 7 and a power unit 8.

It should be noted that in the present specification, the terms "back-and-forth direction", "right-and-left direction" and "up-and-down direction" of the saddle-riding type vehicle 1 refer to the back-and-forth direction, the right-and-left direction and the up-and-down direction seen from a rider of the saddle-riding type vehicle 1. The back-and-forth direction is defined as not only indicating a given direction arranged in parallel to the back-and-forth direction of the saddle-riding type vehicle 1 but also including a given direction tilting at an angle falling in a range of ±45 degrees with respect to the back-and-forth direction of the saddle-riding type vehicle 1. In other words, a given direction, which is closer to the back-and-forth direction than to the right-and-left direction and the up-and-down direction, is classified as the back-and-forth direction.

Likewise, the up-and-down direction is defined as including a given direction tilting at an angle falling in a range of ±45 degrees with respect to the up-and-down direction of the saddle-riding type vehicle 1. In other words, a given direction, which is closer to the up-and-down direction than to the back-and-forth direction and the right-and-left direction, is classified as the up-and-down direction. Further likewise, the right-and-left direction is defined as including a given direction tilting at an angle falling in a range of ±45 degrees with respect to the right-and-left direction of the saddle-riding type vehicle 1. In other words, a given direction, which is closer to the right-and-left direction than to the back-and-forth direction and the up-and-down direction, is classified as the right-and-left direction.

The vehicle body frame 2 includes a head pipe 11, a down frame 12, a lower frame 13 and a rear frame 14. The down frame 12 downwardly extends from the head pipe 11. The lower frame 13 is connected to the lower portion of the down frame 12. The lower frame 13 backwardly extends from the lower portion of the down frame 12. The rear frame 14 is connected to the lower frame 13. The rear frame 14 backwardly and upwardly extends from the rear portion of the lower frame 13.

The front fork device 3 includes a front wheel 5 and a front fork portion 9. The front fork portion 9 is turnably supported by the head pipe 11. The front wheel 5 is turnably supported by the front fork portion 9. When described in detail, the front fork portion 9 includes a steering shaft 15, a bracket 16 and a pair of a left suspension 17 and a right suspension 18. The steering shaft 15 is inserted into the head pipe 11. The steering shaft 15 is supported by the head pipe 11 so as to be rotatable right and left. The lower portion of the steering shaft 15 is connected to the right and left suspensions 18 and 17 through the bracket 16. The front wheel 5 is turnably supported by the suspensions 18 and 17.

The upper portion of the steering shaft 15 is connected to a handle 21. The handle 21 is supported by the upper end of the steering shaft 15. The handle 21 includes a left grip portion 22, a right grip portion 23 and a handlebar 29. The left grip portion 22 and the right grip portion 23 are coupled through the handlebar 29.

The vehicle body cover 4 includes a handle cover 31, a front cover 32, a leg shield 35, a left side cover 38, a right side cover 39, a rear cover 33 and a lower cover 34. The handle cover 31 covers a portion of the handle 21.

The front cover 32 is disposed under the handle cover 31. The front cover 32 is disposed in front of the head pipe 11. The front cover 32 is disposed over the front wheel 5. A front fender 40 is disposed between the front cover 32 and the front wheel 5. The leg shield 35 is disposed under the handle cover 31. The leg shield 35 is disposed behind the head pipe 11 and the down frame 12.

The left side cover 38 downwardly extends from the front cover 32. The left side cover 38 is disposed laterally leftward of the front wheel 5 in the vehicle front view. The right side cover 39 downwardly extends from the front cover 32. The right side cover 39 is disposed laterally rightward of the front wheel 5 in the vehicle front view.

The rear cover 33 covers the surrounding of the rear frame 14. The seat 6 is disposed over the rear cover 33. The seat 6 is disposed rearward of the head pipe 11. The seat 6 is supported by the vehicle body frame 2. When described in detail, the seat 6 is supported by the rear frame 14 through a stay (not shown in the drawings).

The lower cover 34 is disposed between the front cover 32 and the rear cover 33. The lower cover 34 covers the surrounding of the lower frame 13. The upper surface of the lower cover 34 includes a flat footboard 341. The flat footboard 341 is disposed below and in front of the seat 6. The flat footboard 341 is disposed over the lower frame 13. The flat footboard 341 is disposed for enabling a rider to put his/her feet thereon. The flat footboard 341 has a flat shape.

It should be noted that "a flat shape" of the flat footboard 341 means that the flat footboard 341 is flat enough to enable a rider to put his/her feet on any portion thereof. In other words, the flat footboard 341 may include, for instance, convexo-concave portions for an anti-slippage purpose or so forth.

The power unit 8 is disposed under the seat 6. The power unit 8 is pivotably supported by the vehicle body frame 2. The power unit 8 includes an engine 26 and a transmission 27. The rear wheel 7 is turnably supported by the power unit 8. The rear wheel 7 is supported by the vehicle body frame 2 through a rear suspension 28.

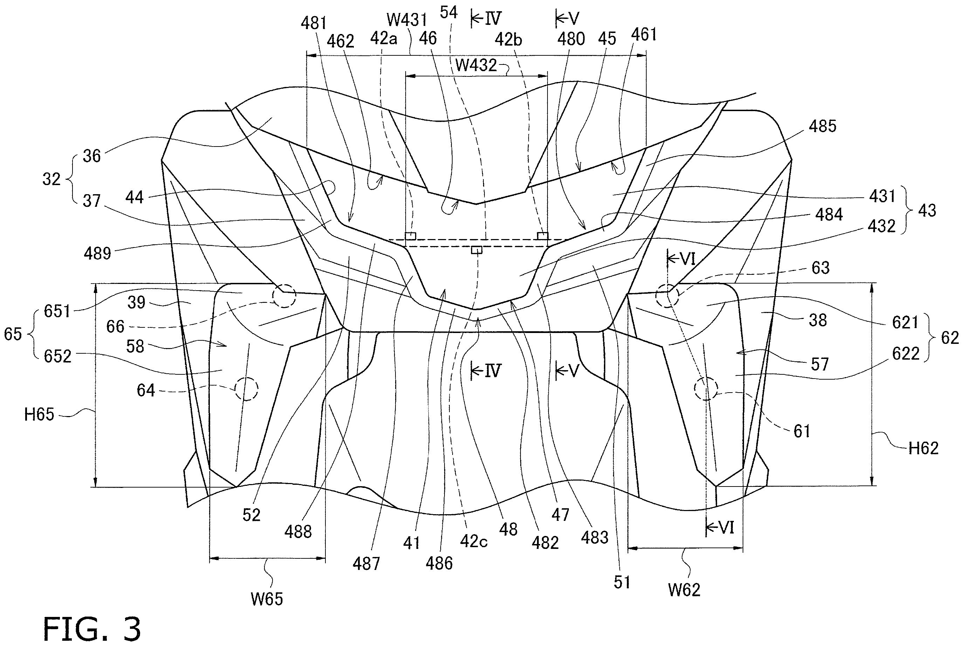

A structure of a front portion of the saddle-riding type vehicle 1 will be hereinafter explained in detail. FIG. 3 is an enlarged front view of the saddle-riding type vehicle 1. The saddle-riding type vehicle 1 includes a headlamp 41. The headlamp 41 is mounted to the front cover 32.

When described in detail, the headlamp 41 includes headlamp light sources 42a, 42b and 42c and a headlamp cover 43. The headlamp cover 43 is made of a material with light transparency, and enables light rays emitted from the headlamp light sources 42a, 42b and 42c to pass therethrough. The front cover 32 includes a headlamp opening 44. The headlamp cover 43 is exposed to the outside through the headlamp opening 44.

The front cover 32 includes a front face 36 and a body 37. The front face 36 is disposed over the headlamp cover 43. As shown in FIG. 1, the front face 36 tilts obliquely upward to the rear in the vehicle side view. The body 37 is disposed under the front face 36. The headlamp opening 44 is bored between the front face 36 and the body 37. The body 37 is located under and laterally rightward and leftward of the headlamp opening 44 in the vehicle front view.

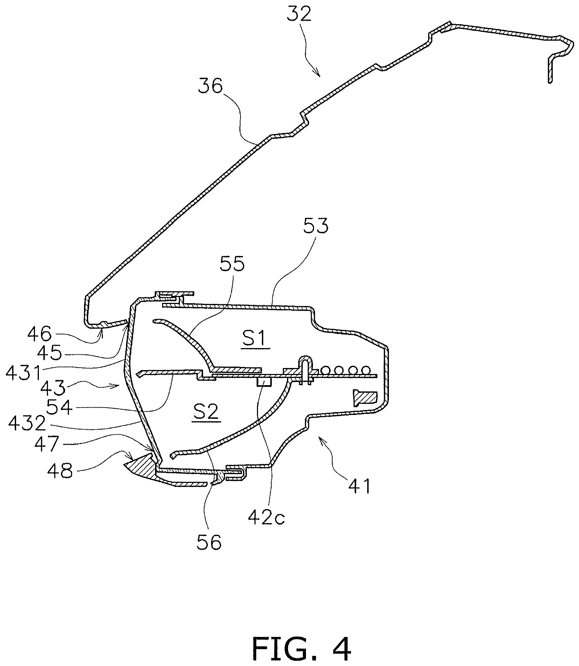

FIG. 4 is a cross-sectional view of FIG. 3 taken along a cutaway line IV-IV. As shown in FIG. 4, an upper edge portion 45 of the headlamp cover 43 is disposed rearward of the front edge of an upper edge portion 46 of the headlamp opening 44. Thus, the front edge of the upper edge portion 46 of the headlamp opening 44 more forwardly protrudes than the upper edge portion 45 of the headlamp cover 43. It should be noted that as shown in FIG. 3, the upper edge portion 45 of the headlamp cover 43 refers to an upper edge portion of the partial headlamp cover 43 exposed through the headlamp opening 44.

As shown in FIG. 3, the upper edge portion 46 of the headlamp opening 44 includes a left upper edge portion 461 and a right upper edge portion 462. The left upper edge portion 461 extends upward and laterally leftward in the vehicle front view. The right upper edge portion 462 extends upward and laterally rightward in the vehicle front view.

As shown in FIG. 4, a lower edge portion 47 of the headlamp cover 43 is disposed rearward of the front edge of a lower edge portion 48 of the headlamp opening 44. Thus, the front edge of the lower edge portion 48 of the headlamp opening 44 more forwardly protrudes than the lower edge portion 47 of the headlamp cover 43. It should be noted that as shown in FIG. 3, the lower edge portion 47 of the headlamp cover 43 refers to a lower edge portion of the partial headlamp cover 43 exposed through the headlamp opening 44.

The lower edge portion 48 of the headlamp opening 44 includes a left lower edge portion 480 and a right lower edge portion 481. The left lower edge portion 480 extends upward and laterally leftward in the vehicle front view. The right lower edge portion 481 extends upward and laterally rightward in the vehicle front view.

The left lower edge portion 480 includes a first left lower edge portion 482, a second left lower edge portion 483, a third left lower edge portion 484 and a fourth left lower edge portion 485. The first left lower edge portion 482 extends laterally leftward from the vehicle width directional center of the lower edge portion 48 of the headlamp opening 44 in the vehicle front view. The second left lower edge portion 483 continues to the first left lower edge portion 482 and extends upward therefrom in the vehicle front view. The third left lower edge portion 484 continues to the second left lower edge portion 483 and extends laterally leftward therefrom in the vehicle front view. The fourth left lower edge portion 485 continues to the third left lower edge portion 484 and extends upward therefrom in the vehicle front view. The fourth left lower edge portion 485 continues to the left upper edge portion 461.

The right lower edge portion 481 includes a first right lower edge portion 486, a second right lower edge portion 487, a third right lower edge portion 488 and a fourth right lower edge portion 489. The first right lower edge portion 486 extends laterally rightward from the vehicle width directional center of the lower edge portion 48 of the headlamp opening 44 in the vehicle front view. The second right lower edge portion 487 continues to the first right lower edge portion 486 and extends upward therefrom in the vehicle front view. The third right lower edge portion 488 continues to the second right lower edge portion 487 and extends laterally rightward therefrom in the vehicle front view. The fourth right lower edge portion 489 continues to the third right lower edge portion 488 and extends upward therefrom in the vehicle front view. The fourth right lower edge portion 489 continues to the right upper edge portion 462.

The headlamp cover 43 includes a headlamp cover upper portion 431 and a headlamp cover lower portion 432. In the vehicle front view, the vehicle width directional dimension (W432) of the headlamp cover lower portion 432 is smaller than that (W431) of the headlamp cover upper portion 431.

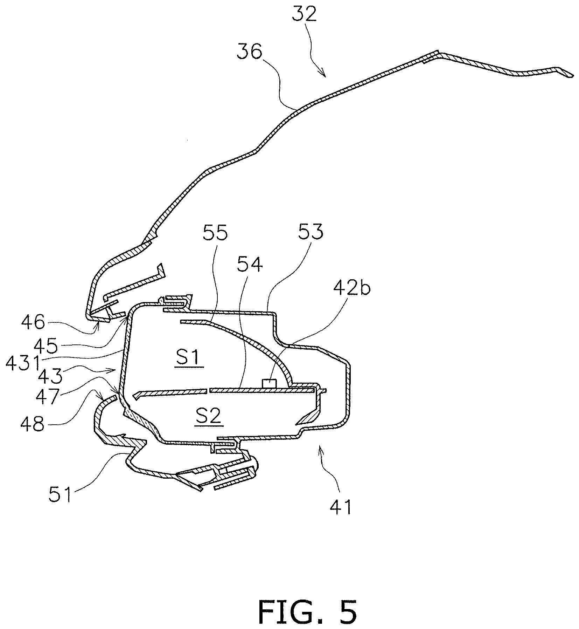

The front cover 32 includes a left recess 51 and a right recess 52. The left recess 51 is located under the left lower edge portion 480. The right recess 52 is located under the right lower edge portion 481. When described in detail, the left recess 51 is located under the third left lower edge portion 484. The right recess 52 is located under the third right lower edge portion 488. FIG. 5 is a cross-sectional view of FIG. 3 taken along a cutaway line V-V. As shown in FIG. 5, the left recess 51 has a backwardly recessed shape. Similarly to the left recess 51, the right recess 52 also has a backwardly recessed shape.

As shown in FIGS. 4 and 5, the headlamp 41 includes a headlamp casing 53. The headlamp casing 53 is disposed behind the headlamp cover 43. The headlamp cover 43 is attached to the headlamp casing 53.

The headlamp 41 includes a substrate 54. The substrate 54 divides the space inside the headlamp 41 into a first space S1 and a second space S2. The first space S1 is located over the second space S2. The first space S1 is located behind the headlamp cover upper portion 431. The second space S2 is located behind the headlamp cover lower portion 432.

As shown in FIG. 3, the aforementioned headlamp light sources 42a, 42b and 42c include a first light source 42a, a second light source 42b and a third light source 42c. The first light source 42a and the second light source 42b are disposed so as to face to the first space S1. The third light source 42c is disposed so as to face to the second space S2. For example, the first light source 42a, the second light source 42b and the third light source 42c are LEDs. It should be noted that the first light source 42a, the second light source 42b and the third light source 42c are not limited to LEDs, and alternatively, may be another type of light sources such as light bulbs.

The first light source 42a and the second light source 42b are attached to the upper surface of the substrate 54. The first light source 42a and the second light source 42b are disposed away from each other on the right and left sides of the vehicle width directional middle of the headlamp cover 43. The third light source 42c is attached to the lower surface of the substrate 54. The third light source 42c is disposed in the vehicle width directional middle of the headlamp cover 43.

As shown in FIG. 4, the headlamp 41 includes an upper reflector 55 and a lower reflector 56. The upper reflector 55 is disposed inside the first space S1. The upper reflector 55 forwardly reflects light rays emitted from the first light source 42a and the second light source 42b. The lower reflector 56 is disposed inside the second space S2. The lower reflector 56 forwardly reflects a light ray emitted from the third light source 42c.

As shown in FIGS. 2 and 3, the saddle-riding type vehicle 1 includes a left lamp 57 and a right lamp 58. The left lamp 57 is attached to the left side cover 38. The left lamp 57 is disposed laterally leftward of a portion of the headlamp 41 in the vehicle front view. When described in detail, the left lamp 57 is disposed laterally leftward of the headlamp cover lower portion 432 in the vehicle front view. The left lamp 57 is disposed laterally leftward of the third left lower edge portion 484 in the vehicle front view.

The left lamp 57 is partially disposed below the lower end of the headlamp 41. The left lamp 57 is partially disposed below the lower end of the front cover 32. When described in detail, the lower end of the left lamp 57 is disposed below the lower end of the headlamp 41. The upper end of the left lamp 57 is disposed above the lower end of the headlamp 41.

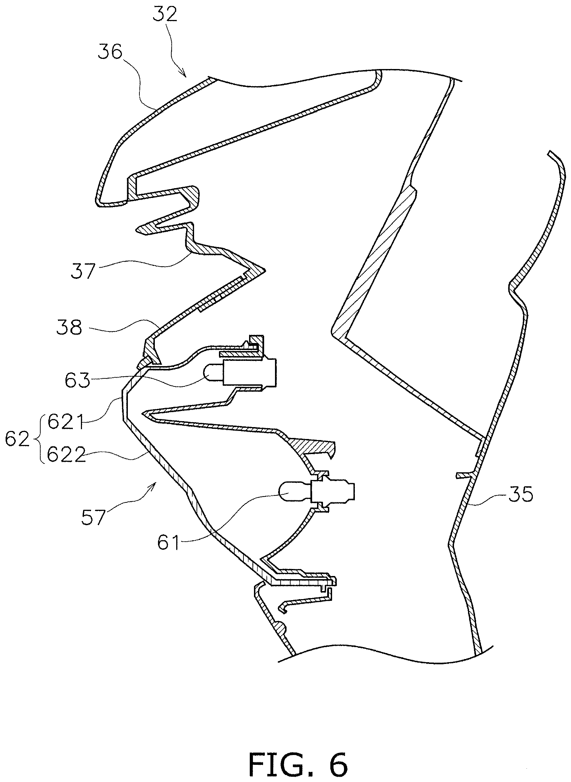

FIG. 6 is a cross-sectional view of FIG. 3 taken along a cutaway line VI-VI. As shown in FIGS. 3 and 6, the left lamp 57 includes a left lamp light source 61 and a left lamp cover 62. For example, the left lamp light source 61 is a light bulb. It should be noted that the left lamp light source 61 may be another type of light source such as an LED. The left lamp cover 62 is made of a material with light transparency, and enables a light ray emitted from the left lamp light source 61 to pass therethrough.

The vehicle up-and-down directional dimension (H62) of the left lamp cover 62 is larger than the vehicle width directional dimension (W62) of the left lamp cover 62 in the vehicle front view. In other words, the left lamp cover 62 has a longitudinally elongated shape. The left lamp cover 62 includes a left lamp cover upper portion 621 and a left lamp cover lower portion 622. The left lamp cover lower portion 622 downwardly extends from the left lamp cover upper portion 621. In the vehicle front view, the left lamp cover upper portion 621 is larger than the left lamp cover lower portion 622 in the vehicle width direction.

The upper end of the left lamp cover 62 is disposed above the lower end of the headlamp cover lower portion 432 in the vehicle front view. When described in detail, the left lamp cover upper portion 621 is partially disposed above the lower end of the headlamp cover lower portion 432 in the vehicle front view. The left lamp cover lower portion 622 is disposed below the lower end of the headlamp cover lower portion 432 in the vehicle front view.

The right lateral end of the left lamp cover 62 is disposed laterally rightward of the left lateral end of the headlamp cover upper portion 431 in the vehicle front view. The left lateral end of the left lamp cover 62 is disposed laterally leftward of the left lateral end of the headlamp cover upper portion 431 in the vehicle front view.

In the present exemplary embodiment, the left lamp light source 61 is a light source of a left flasher. The left lamp light source 61 is disposed behind the left lamp cover lower portion 622. The left lamp 57 includes a light source 63 of a left position lamp. The light source 63 of the left position lamp is disposed over the left lamp light source 61. The light source 63 of the left position lamp is disposed behind the left lamp cover upper portion 621. It should be noted that the left lamp light source 61 is not limited to the light source of the left flasher, and alternatively, may be a light source of the left position lamp.

The right lamp 58 is attached to the right side cover 39. The right lamp 58 is disposed laterally rightward of a portion of the headlamp 41 in the vehicle front view. When described in detail, the right lamp 58 is disposed laterally rightward of the headlamp cover lower portion 432 in the vehicle front view. The right lamp 58 is disposed laterally rightward of the third right lower edge portion 488 in the vehicle front view.

The right lamp 58 is partially disposed below the lower end of the headlamp 41. The right lamp 58 is partially disposed below the lower end of the front cover 32. When described in detail, the lower end of the right lamp 58 is disposed below the lower end of the headlamp 41. The upper end of the right lamp 58 is disposed above the lower end of the headlamp 41.

The right lamp 58 includes a right lamp light source 64 and a right lamp cover 65. For example, the right lamp light source 64 is a light bulb. It should be noted that the right lamp light source 64 may be another type of light source such as an LED. The right lamp cover 65 is made of a material with light transparency, and enables a light ray emitted from the right lamp light source 64 to pass therethrough.

The vehicle up-and-down directional dimension (H65) of the right lamp cover 65 is larger than the vehicle width directional dimension (W65) of the right lamp cover 65 in the vehicle front view. In other words, the right lamp cover 65 has a longitudinally elongated shape. The right lamp cover 65 includes a right lamp cover upper portion 651 and a right lamp cover lower portion 652. The right lamp cover lower portion 652 downwardly extends from the right lamp cover upper portion 651. In the vehicle front view, the right lamp cover upper portion 651 is larger than the right lamp cover lower portion 652 in the vehicle width direction.

The upper end of the right lamp cover 65 is disposed above the lower end of the headlamp cover lower portion 432 in the vehicle front view. When described in detail, the right lamp cover upper portion 651 is partially disposed above the lower end of the headlamp cover lower portion 432 in the vehicle front view. The right lamp cover lower portion 652 is disposed below the lower end of the headlamp cover lower portion 432 in the vehicle front view.

The left lateral end of the right lamp cover 65 is disposed laterally leftward of the right lateral end of the headlamp cover upper portion 431 in the vehicle front view. The right lateral end of the right lamp cover 65 is disposed laterally rightward of the right lateral end of the headlamp cover upper portion 431 in the vehicle front view.

In the present exemplary embodiment, the right lamp light source 64 is a light source of a right flasher. The right lamp light source 64 is disposed behind the right lamp cover lower portion 652. The right lamp 58 includes a light source 66 of a right position lamp. The light source 66 of the right position lamp is disposed over the right lamp light source 64. The light source 66 of the right position lamp is disposed behind the right lamp cover upper portion 651. It should be noted that the right lamp light source 64 is not limited to the light source of the right flasher, and alternatively, may be a light source of the right position lamp.

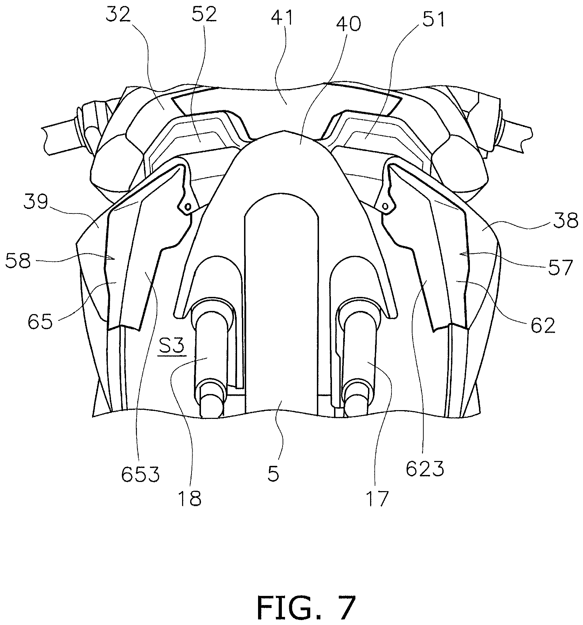

FIG. 7 is a view of the front portion of the saddle-riding type vehicle 1 as seen from an obliquely bottom side. As shown in FIGS. 2 and 7, the front cover 32, the left side cover 38 and the right side cover 39 produce a space S3 for rotating of the front fork device 3. As shown in FIG. 7, an inner lateral portion 623 of the left lamp cover 62 and an inner lateral portion 653 of the right lamp cover 65 are exposed to the space S3 for rotating of the front fork device 3. The inner lateral portion 623 of the left lamp cover 62 and the inner lateral portion 653 of the right lamp cover 65 enable light rays to pass therethrough. Therefore, light rays are emitted through the inner lateral portion 623 of the left lamp cover 62 and the inner lateral portion 653 of the right lamp cover 65.

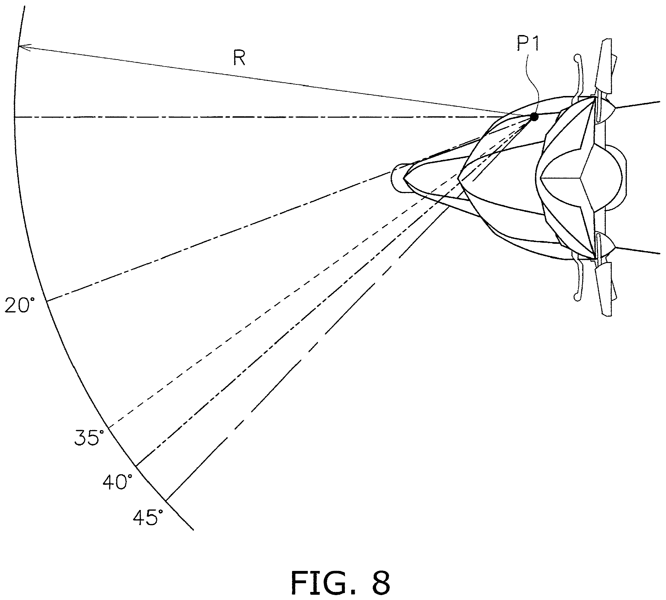

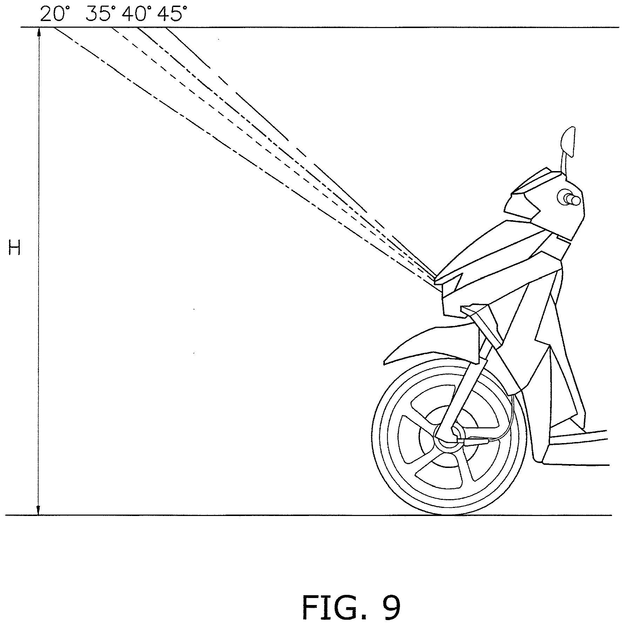

Next, a view angle of the right lamp 58 will be explained. As shown in FIG. 8, a first viewpoint is defined as a viewpoint that is located laterally leftward of the width directional center of the vehicle and is located forward of and above the headlamp 41 and the right lamp 58. As shown in the vehicle plan view of FIG. 8, a distance R between the first viewpoint and a center P1 of the right lamp light source 64 is set to be a constant predetermined distance. For example, the predetermined distance is set to be 1500 mm, but may be set to be different from 1500 mm. Further, as shown in the vehicle side view of FIG. 9, a height H of the first viewpoint from the ground is set to be a constant predetermined height. For example, the predetermined height is set to be 1500 mm, but may be set to be different from 1500 mm. It should be noted that as shown in FIG. 8, the distance R between the first viewpoint and the center P1 of the right lamp light source 64 is set to be a constant predetermined distance where the angle of the first viewpoint varies among 20 degrees, 35 degrees, 40 degrees and 45 degrees. Thus in FIG. 9, the position of the first viewpoint varies in the back-and-forth direction where the angle of the first viewpoint varies among 20 degrees, 35 degrees, 40 degrees and 45 degrees.

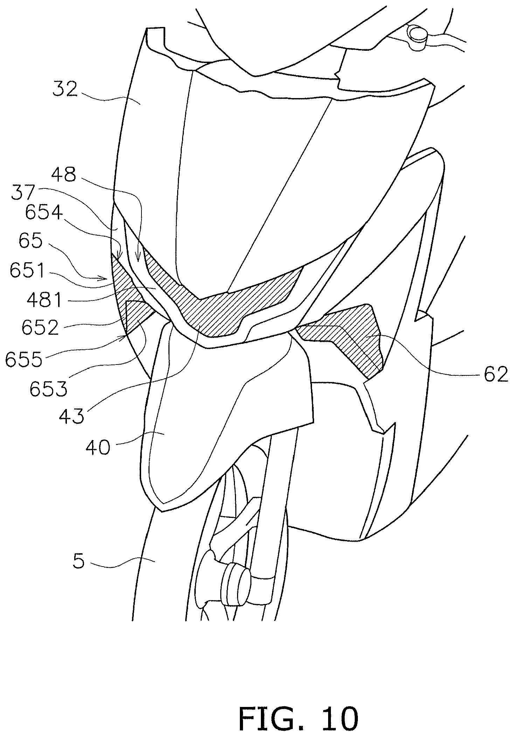

In the vehicle plan view, the angle of the first viewpoint refers to an angle formed by a straight line connecting the first viewpoint and the center P1 of the right lamp light source 64 and a straight line that passes through the center P1 of the right lamp light source 64 and extends ahead of the vehicle. FIGS. 10 to 13 show the front portion of the saddle-riding type vehicle 1 as seen from the first viewpoint where the angle of the first viewpoint varies.

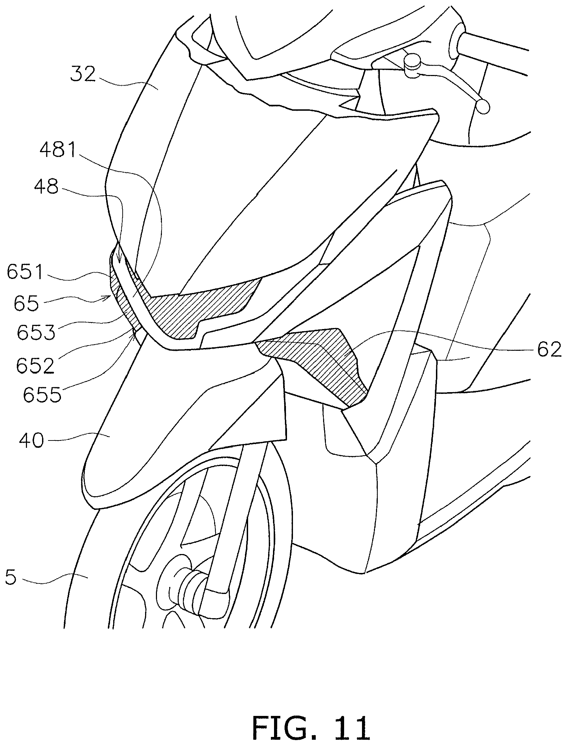

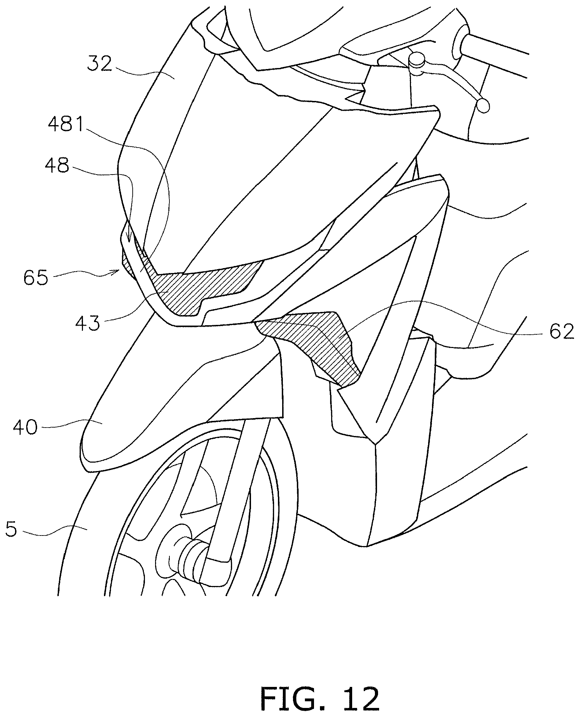

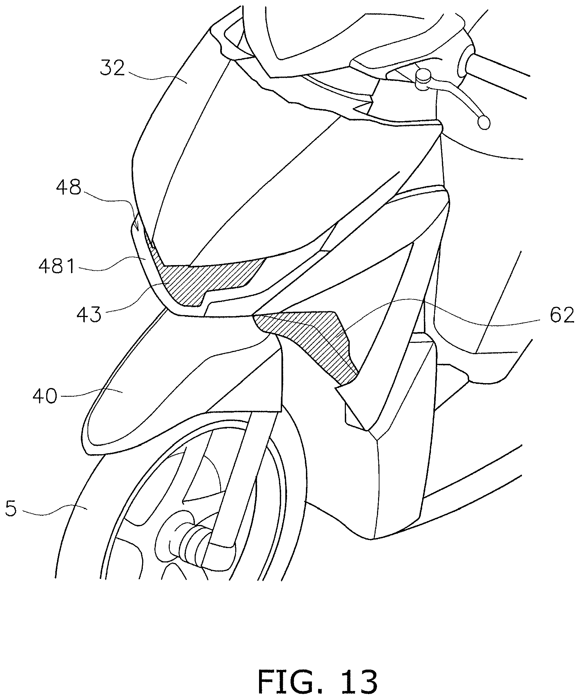

When described in detail, FIG. 10 shows the saddle-riding type vehicle 1 where the angle of the first viewpoint is set to be 20 degrees. FIG. 11 shows the saddle-riding type vehicle 1 where the angle of the first viewpoint is set to be 35 degrees. FIG. 12 shows the saddle-riding type vehicle 1 where the angle of the first viewpoint is set to be 40 degrees. FIG. 13 shows the saddle-riding type vehicle 1 where the angle of the first viewpoint is set to be 45 degrees.

As shown in FIGS. 10 to 12, where the angle of the first viewpoint is set to be 40 degrees or less, the right lamp cover 65 and the headlamp cover 43 are both visible in the view from the first viewpoint. The lower edge portion 48 of the headlamp opening 44 is visible between the right lamp cover 65 and the headlamp cover 43. In other words, the right lamp cover 65 and the headlamp cover 43 are divided through the lower edge portion 48 of the headlamp opening 44 in the view from the first viewpoint. The right lower edge portion 481 is visible between the right lamp cover 65 and the headlamp cover 43 in the view from the first viewpoint.

When described in detail, as shown in FIG. 10, where the angle of the first viewpoint is set to be 20 degrees, the body 37 of the front cover 32 overlaps with a portion of the right lamp cover 65 in the view from the first viewpoint. Where the angle of the first viewpoint is set to be 20 degrees, an upper edge 654 of the right lamp cover 65 is at least partially visible. Where the angle of the first viewpoint is set to be 20 degrees, a lower end 655 of the inner lateral portion 653 of the right lamp cover 65 is visible. Further, where the angle of the first viewpoint is set to be 20 degrees, a view range that the right lamp cover 65 is visible is larger than a range that the right lamp cover 65 overlaps with the lower edge portion 48 of the headlamp opening 44.

As shown in FIG. 11, where the angle of the first viewpoint is set to be 35 degrees, the view range of the right lamp cover 65 is smaller than that of the right lamp cover 65 where the angle of the first viewpoint is set to be 20 degrees. Where the angle of the first viewpoint is set to be 35 degrees, the lower edge portion 48 of the headlamp opening 44 overlaps with a portion of the right lamp cover lower portion 652 in the view from the first viewpoint. Where the angle of the first viewpoint is set to be 35 degrees, the lower edge portion 48 of the headlamp opening 44 overlaps with a portion of the inner lateral portion 653 of the right lamp cover 65 in the view from the first viewpoint. Where the angle of the first viewpoint is set to be 35 degrees, the upper edge 654 of the right lamp cover 65 is invisible because the upper edge 654 overlaps with the lower edge portion 48 of the headlamp opening 44. Where the angle of the first viewpoint is set to be 35 degrees, the lower end 655 of the inner lateral portion 653 of the right lamp cover 65 is visible. Further, where the angle of the first viewpoint is set to be 35 degrees, the view range of the right lamp cover 65 is smaller than the range that the right lamp cover 65 overlaps with the lower edge portion 48 of the headlamp opening 44.

As shown in FIG. 12, where the angle of the first viewpoint is set to be 40 degrees, the view range of the right lamp cover 65 is smaller than that of the right lamp cover 65 where the angle of the first viewpoint is set to be 35 degrees. Where the angle of the first viewpoint is set to be 40 degrees, the lower edge portion 48 of the headlamp opening 44 overlaps with a portion of the right lamp cover lower portion 652 in the view from the first viewpoint. Where the angle of the first viewpoint is set to be 40 degrees, the lower edge portion 48 of the headlamp opening 44 overlaps with a portion of the inner lateral portion 653 of the right lamp cover 65 in the view from the first viewpoint. Where the angle of the first viewpoint is set to be 40 degrees, the upper edge 654 of the right lamp cover 65 is invisible because the upper edge 654 overlaps with the lower edge portion 48 of the headlamp opening 44. Where the angle of the first viewpoint is set to be 40 degrees, the lower end 655 of the inner lateral portion 653 of the right lamp cover 65 is invisible because the lower end 655 overlaps with the lower edge portion 48 of the headlamp opening 44. Further, where the angle of the first viewpoint is set to be 40 degrees, the view range of the right lamp cover 65 is smaller than the range that the right lamp cover 65 overlaps with the lower edge portion 48 of the headlamp opening 44.

It should be noted that as shown in FIG. 13, where the angle of the first viewpoint is set to be 45 degrees, the right lamp cover 65 is invisible because the right lamp cover 65 entirely overlaps with the front cover 32 and the headlamp cover 43. Thus in the present exemplary embodiment, the upper limit of the view angle of the right lamp 58 is an angle falling in a range of greater than or equal to 40 degrees and less than 45 degrees.

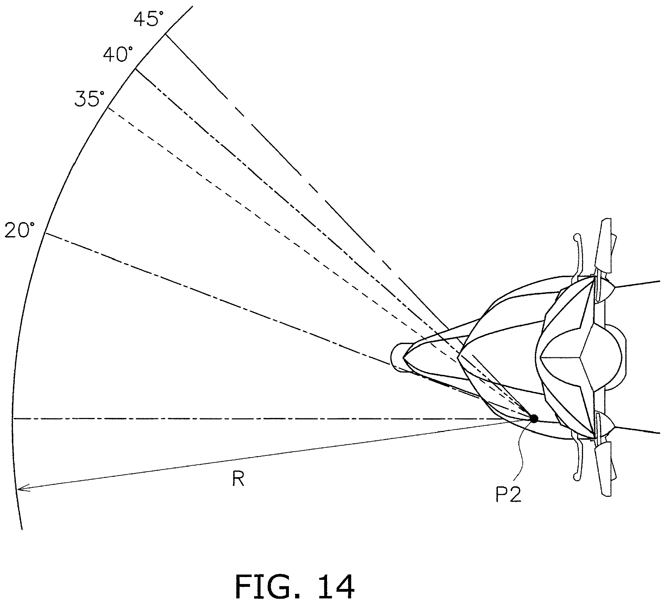

Next, the view angle of the left lamp 57 will be explained. As shown in FIG. 14, a second viewpoint is defined as a viewpoint that is located laterally rightward of the width directional center of the vehicle and is located forward of and above the headlamp 41 and the left lamp 57. Similarly to the first viewpoint, in the vehicle plan view, the distance R between the second viewpoint and a center P2 of the left lamp light source 61 is set to be a constant predetermined distance. Further similarly to the first viewpoint, in the vehicle side view, the height H of the second viewpoint from the ground is also set to be a constant predetermined height.

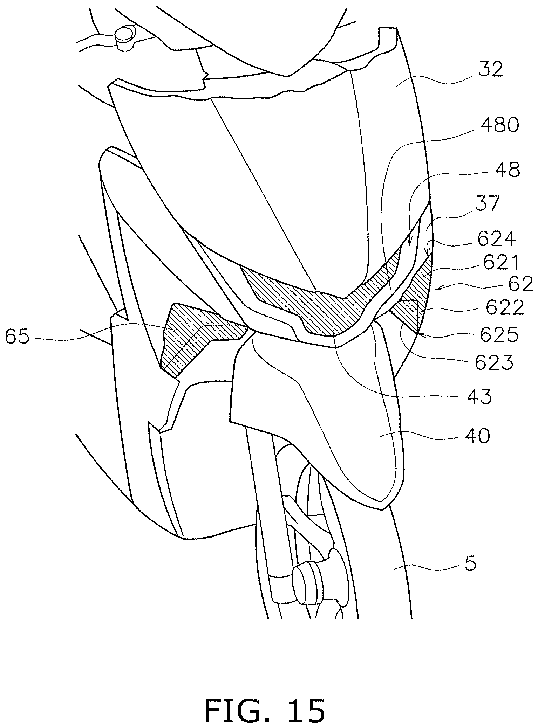

In the vehicle plan view, an angle of the second viewpoint refers to an angle formed by a straight line connecting the second viewpoint and the center P2 of the left lamp light source 61 and a straight line that passes through the center P2 of the left lamp light source 61 and extends ahead of the vehicle. FIGS. 15 to 18 show the saddle-riding type vehicle 1 as seen from the second viewpoint where the angle of the second viewpoint varies.

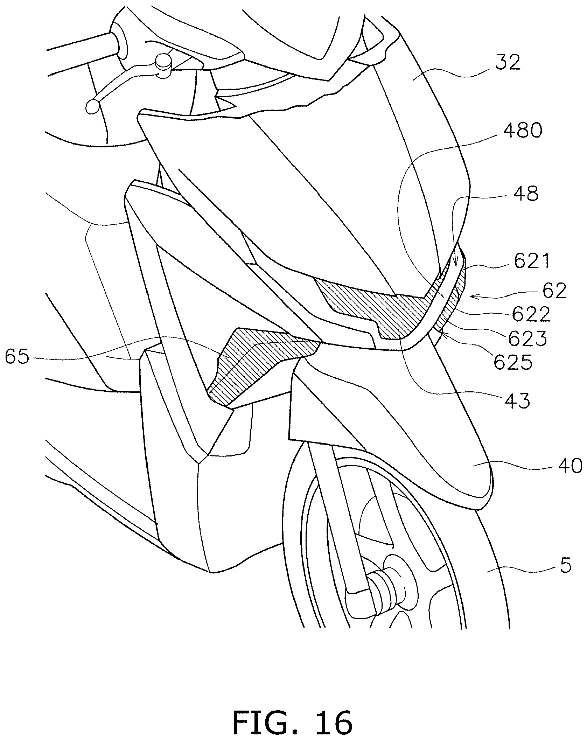

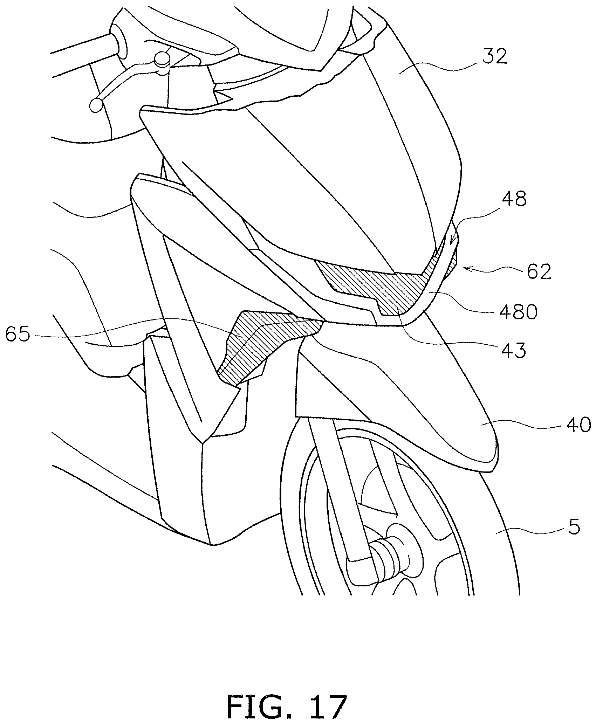

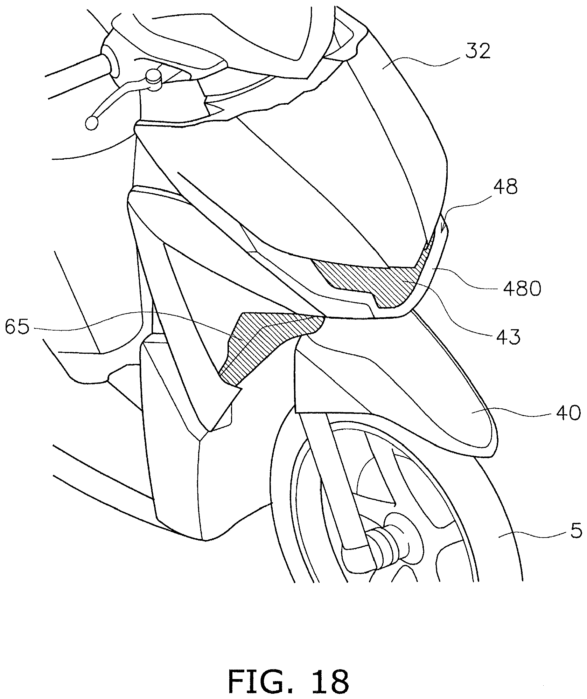

When described in detail, FIG. 15 shows the saddle-riding type vehicle 1 where the angle of the second viewpoint is set to be 20 degrees. FIG. 16 shows the saddle-riding type vehicle 1 where the angle of the second viewpoint is set to be 35 degrees. FIG. 17 shows the saddle-riding type vehicle 1 where the angle of the second viewpoint is set to be 40 degrees. FIG. 18 shows the saddle-riding type vehicle 1 where the angle of the second viewpoint is set to be 45 degrees.

As shown in FIGS. 15 to 17, where the angle of the second viewpoint is set to be 40 degrees or less, the left lamp cover 62 and the headlamp cover 43 are both visible in the view from the second viewpoint, and the lower edge portion 48 of the headlamp opening 44 is visible between the left lamp cover 62 and the headlamp cover 43. In other words, the left lamp cover 62 and the headlamp cover 43 are divided through the lower edge portion 48 of the headlamp opening 44 in the view from the second viewpoint. The left lower edge portion 480 is visible between the left lamp cover 62 and the headlamp cover 43 in the view from the second viewpoint.

When described in detail, as shown in FIG. 15, where the angle of the second viewpoint is set to be 20 degrees, the body 37 of the front cover 32 overlaps with a portion of the left lamp cover 62 in the view from the second viewpoint. Where the angle of the second viewpoint is set to be 20 degrees, an upper edge 624 of the left lamp cover 62 is at least partially visible. Where the angle of the second viewpoint is set to be 20 degrees, a lower end 625 of the inner lateral portion 623 of the left lamp cover 62 is visible. Further, where the angle of the second viewpoint is set to be 20 degrees, a view range that the left lamp cover 62 is visible is larger than a range that the left lamp cover 62 overlaps with the lower edge portion 48 of the headlamp opening 44.

As shown in FIG. 16, where the angle of the second viewpoint is set to be 35 degrees, the view range of the left lamp cover 62 is smaller than that of the left lamp cover 62 where the angle of the second viewpoint is set to be 20 degrees. Where the angle of the second viewpoint is set to be 35 degrees, the lower edge portion 48 of the headlamp opening 44 overlaps with a portion of the left lamp cover lower portion 622 in the view from the second viewpoint. Where the angle of the second viewpoint is set to be 35 degrees, the lower edge portion 48 of the headlamp opening 44 overlaps with a portion of the inner lateral portion 623 of the left lamp cover 62 in the view from the second viewpoint. Where the angle of the second viewpoint is set to be 35 degrees, the upper edge 624 of the left lamp cover 62 is invisible because the upper edge 624 overlaps with the lower edge portion 48 of the headlamp opening 44. Where the angle of the second viewpoint is set to be 35 degrees, the lower end 625 of the inner lateral portion 623 of the left lamp cover 62 is visible. Further, where the angle of the second viewpoint is set to be 35 degrees, the view range of the left lamp cover 62 is smaller than the range that the left lamp cover 62 overlaps with the lower edge portion 48 of the headlamp opening 44.

As shown in FIG. 17, where the angle of the second viewpoint is set to be 40 degrees, the view range of the left lamp cover 62 is smaller than that of the left lamp cover 62 where the angle of the second viewpoint is set to be 35 degrees. Where the angle of the second viewpoint is set to be 40 degrees, the lower edge portion 48 of the headlamp opening 44 overlaps with a portion of the left lamp cover lower portion 622 in the view from the second viewpoint. Where the angle of the second viewpoint is set to be 40 degrees, the lower edge portion 48 of the headlamp opening 44 overlaps with a portion of the inner lateral portion 623 of the left lamp cover 62 in the view from the second viewpoint. Where the angle of the second viewpoint is set to be 40 degrees, the upper edge 624 of the left lamp cover 62 is invisible because the upper edge 624 overlaps with the lower edge portion 48 of the headlamp opening 44. Where the angle of the second viewpoint is set to be 40 degrees, the lower end 625 of the inner lateral portion 623 of the left lamp cover 62 is invisible because the lower end 625 overlaps with the lower edge portion 48 of the headlamp opening 44. Further, where the angle of the second viewpoint is set to be 40 degrees, the view range of the left lamp cover 62 is smaller than the range that the left lamp cover 62 overlaps with the lower edge portion 48 of the headlamp opening 44.

It should be noted that as shown in FIG. 18, where the angle of the second viewpoint is set to be 45 degrees, the left lamp cover 62 is invisible because the left lamp cover 62 entirely overlaps with the front cover 32 and the headlamp cover 43. Thus in the present exemplary embodiment, the upper limit of the view angle of the left lamp 57 is an angle falling in a range of greater than or equal to 40 degrees and less than 45 degrees.

The saddle-riding type vehicle 1 according to the present exemplary embodiment explained above includes a structure that a portion of the left lamp 57 and a portion of the right lamp 58 are disposed below the lower end of the headlamp 41. In other words, the headlamp 41 and the right and left lamps 58 and 57 are disposed so as to be displaced from each other in the up-and-down direction. Thus, width directional enlargement of the vehicle can be inhibited even when the headlamp 41 or the right and left lamps 58 and 57 is/are enlarged.

Further, the inner lateral portion 623 of the left lamp cover 62 and the inner lateral portion 653 of the right lamp cover 65 are exposed to the space S3 for rotating of the front fork device 3. Thus, each of the inner lateral portions 653 and 623 of the right and left lamp covers 65 and 62 is visible at a larger angle when seen from a position located on the laterally opposite side thereof. Thus, the space for rotating of the front fork device 3 can be utilized for viewing each of the right and left lamps 58 and 57 from the position located on the laterally opposite side thereof by partially disposing the right and left lamps 58 and 57 so as to be below the lower end of the headlamp 41. Accordingly, each of the right and left lamps 58 and 57 is easily visible at a larger angle from the position located on the laterally opposite side thereof, and further, width directional enlargement of the vehicle can be inhibited.

Further, in the saddle-riding type vehicle 1 according to the present exemplary embodiment, the lower edge portion 47 of the headlamp cover 43 is disposed rearward of the front edge of the lower edge portion 48 of the headlamp opening 44. Thus, there is a low potential that the headlamp cover 43 and each of the right and left lamp covers 65 and 62 overlap in the view from the first viewpoint or the second viewpoint. Further, the lower edge portion 48 of the headlamp opening 44 is visible between the right lamp cover 65 and the headlamp cover 43 in the view from the first viewpoint. In other words, the right lamp cover 65 and the headlamp cover 43 are divided through the lower edge portion 48 of the headlamp opening 44 in the view from the first viewpoint. Accordingly, the right lamp cover 65 and the headlamp cover 43 can be better differentiated from each other.

Further, the lower edge portion 48 of the headlamp opening 44 is visible between the left lamp cover 62 and the headlamp cover 43 in the view from the second viewpoint. The left lamp cover 62 and the headlamp cover 43 are divided through the lower edge portion 48 of the headlamp opening 44 in the view from the second viewpoint. Accordingly, the left lamp cover 62 and the headlamp cover 43 can be better differentiated from each other.

As described above, in the saddle-riding type vehicle 1 according to the present exemplary embodiment, it is possible to simultaneously achieve enlargement of either the headlamp 41 or the right and left lamps 58 and 57 and compactness in width directional size of the vehicle, and further, it is possible to achieve better differentiation between the headlamp 41 and the right and left lamps 58 and 57.

The vehicle up-and-down directional dimension H62 of the left lamp cover 62 is larger than the vehicle width directional dimension W62 of the left lamp cover 62 in the vehicle front view. Likewise, the vehicle up-and-down directional dimension H65 of the right lamp cover 65 is larger than the vehicle width directional dimension W65 of the right lamp cover 65 in the vehicle front view. Thus, it is possible to achieve compactness in width directional dimension of the vehicle.

The left lower edge portion 480 extends upward and laterally leftward in the vehicle front view. On the other hand, the right lower edge portion 481 extends upward and laterally rightward in the vehicle front view. Thus, the right and left lower edge portions 481 and 480 can be elongated. It is thereby possible to achieve much better differentiation between the headlamp cover 43 and the right and left lamp covers 65 and 62.

The front cover 32 includes the left recess 51 and the right recess 52. The left recess 51 is located under the left lower edge portion 480. On the other hand, the right recess 52 is located under the right lower edge portion 481. Thus, it is possible to compactly form the front portion of the vehicle, and further, to achieve better differentiation between the headlamp cover 43 and the right and left lamp covers 65 and 62.

The lower edge portion 48 of the headlamp opening 44 overlaps with a portion of the right lamp cover lower portion 652 in the view from the first viewpoint, where the angle of the first viewpoint is at least set to be in a range of greater than or equal to 35 degrees and less than or equal to 40 degrees. Likewise, the lower edge portion 48 of the headlamp opening 44 overlaps with a portion of the left lamp cover lower portion 622 in the view from the second viewpoint, where the angle of the second viewpoint is at least set to be in a range of greater than or equal to 35 degrees and less than or equal to 40 degrees. Thus, due to overlapping between the lower edge portion 48 and the downwardly extending portions of the right and left lamp covers 65 and 62, it is possible to achieve much better differentiation between the headlamp cover 43 and right and left lamp covers 65 and 62.

It should be noted that when the first viewpoint's angular range, in which the lower edge portion 48 of the headlamp opening 44 overlaps with a portion of the right lamp cover lower portion 652 in the view from the first viewpoint, is not limited to and may be different from an angular range of greater than or equal to 35 degrees and less than or equal to 40 degrees. Likewise, the second viewpoint's angular range, in which the lower edge portion 48 of the headlamp opening 44 overlaps with a portion of the left lamp cover lower portion 622 in the view from the second viewpoint, is not limited to and may be different from an angular range of greater than or equal to 35 degrees and less than or equal to 40 degrees.

The lower edge portion 48 of the headlamp opening 44 overlaps with a portion of the inner lateral portion 653 of the right lamp cover 65 in the view from the first viewpoint, where the angle of the first viewpoint is at least set to be in a range of greater than or equal to 35 degrees and less than or equal to 40 degrees. Likewise, the lower edge portion 48 of the headlamp opening 44 overlaps with a portion of the inner lateral portion 623 of the left lamp cover 62 in the view from the second viewpoint, where the angle of the second viewpoint is at least set to be in a range of greater than or equal to 35 degrees and less than or equal to 40 degrees. Thus, it is possible to make each of the right and left lamps 58 and 57 visible at a large angle when seen from a position located on the laterally opposite side of the respective lamp 58, 57, and also, it is possible to achieve much better differentiation between the headlamp cover 43 and the right and left lamp covers 65 and 62.

It should be noted that the first viewpoint's angular range, in which the lower edge portion 48 of the headlamp opening 44 overlaps with a portion of the inner lateral portion 653 of the right lamp cover 65 in the view from the first viewpoint, is not limited to and may be different from an angular range of greater than or equal to 35 degrees and less than or equal to 40 degrees. Likewise, the second viewpoint's angular range, in which the lower edge portion 48 of the headlamp opening 44 overlaps with a portion of the inner lateral portion 623 of the left lamp cover 62 in the view from the second viewpoint, is not limited to and may be different from an angular range of greater than or equal to 35 degrees and less than or equal to 40 degrees.

The headlamp cover lower portion 432 includes a width smaller than that of the headlamp cover upper portion 431 in the vehicle front view. Thus, it is possible to partially enlarge the front cover 32, i.e., the portion located between the headlamp cover lower portion 432 and each of the right and left lamp covers 65 and 62, due to the headlamp cover lower portion 432 having a small width. Accordingly, it is possible to achieve much better differentiation between the headlamp cover 43 and the right and left lamp covers 65 and 62. Alternatively, the right and left lamp covers 65 and 62 can be disposed more laterally inward due to the headlamp cover lower portion 432 having a small width. Accordingly, the right and left lamp covers 65 and 62 can be compactly disposed in the width direction.

The upper end of the left lamp cover 62 and that of the right lamp cover 65 are disposed above the lower end of the headlamp cover lower portion 432 in the vehicle front view. By thus disposing the right and left lamp covers 65 and 62 so as to overlap with the headlamp cover lower portion 432 in the height direction, the right and left lamp covers 65 and 62 can be compactly disposed in the width direction.

The first light source 42a and the second light source 42b are disposed so as to face to the first space S1 produced rearward of the headlamp cover upper portion 431. On the other hand, the third light source 42c is disposed so as to face to the second space S2 produced rearward of the headlamp cover lower portion 432. It is thus possible to easily form the headlamp cover 43 with a shape that the headlamp cover lower portion 432 includes a width smaller than that of the headlamp cover upper portion 431 in the vehicle front view, and also, it is possible to reliably obtain a sufficient amount of light.

The first light source 42a and the second light source 42b are attached to the upper surface of the substrate 54. On the other hand, the third light source 42c is attached to the lower surface of the substrate 54. Thus, the first to third light sources 42a to 42c are attached to the same substrate 54, and thereby, enhancement in productivity and cost reduction can be achieved. Further, compared to a structure that the first to third light sources 42a to 42c are disposed on the same surface of the substrate 54 so as to be aligned in the vehicle width direction, reduction in vehicle width directional size of the internal structure of the headlamp 41 can be achieved in the aforementioned structure that the first light source 42a and the second light source 42b are attached to the upper surface of the substrate 54 whereas the third light source 42c is attached to the lower surface of the substrate 54.

One exemplary embodiment of the present invention has been explained above. However, the present invention is not limited to the aforementioned exemplary embodiment, and a variety of changes can be made without departing from the scope of the present invention.

The number of wheels of the saddle-riding type vehicle 1 according to the present invention is not limited to two and may be three or more. For example, the saddle-riding type vehicle 1 may include two front wheels and one rear wheel. The saddle-riding type vehicle 1 is not limited to the scooter-type vehicle, and may be another type of motorcycle such as a sport motorcycle or a moped. Alternatively, the saddle-riding type vehicle 1 is not limited to the motorcycle, and may be another type of vehicle such as an ATV (All-Terrain Vehicle).

The shape of the front cover 32 is not limited to that described in the aforementioned exemplary embodiment, and may be changed. For example, the front cover 32 may not include the left recess 51 and the right recess 52.

The shapes or the positional arrangements of the headlamp cover 43, the left lamp cover 62 and the right lamp cover 65 are not limited to those described in the aforementioned exemplary embodiment, and may be changed. For example, the left lamp cover 62 may be disposed laterally leftward of the entire headlamp cover 43 in the vehicle front view. The right lamp cover 65 may be disposed laterally rightward of the entire headlamp cover 43 in the vehicle front view.

The left lamp cover 62 may be entirely disposed below the lower end of the headlamp cover 43 in the vehicle front view. Likewise, the right lamp cover 65 may be entirely disposed below the lower end of the headlamp cover 43 in the vehicle front view. Also, the upper end of the left lamp cover 62 and that of the right lamp cover 65 may be disposed below the lower end of the headlamp cover lower portion 432 in the vehicle front view.

The number of the headlamp light sources is not limited to three as described in the aforementioned exemplary embodiment, and may be less than or more than three. The positional arrangements of the headlamp light sources are not limited to those described in the aforementioned exemplary embodiment, and may be changed.

The view range of the right lamp cover 65 from the first viewpoint is not limited to that described in the aforementioned exemplary embodiment, and may be changed. Likewise, the view range of the left lamp cover 62 from the second viewpoint is not limited to that described in the aforementioned exemplary embodiment, and may be changed. Also, the upper limit of the view angle of the left lamp cover 62 is not limited to an angle falling in a range of greater than or equal to 40 degrees and less than 45 degrees as described in the aforementioned exemplary embodiment, and may be changed. Likewise, the upper limit of the view angle of the right lamp 58 is not limited to be an angle falling in a range of greater than or equal to 40 degrees and less than 45 degrees, and may be changed.

The terms and expressions, as used herein, are provided for the purpose of explanation, not of limitation to interpretation. It is to be recognized that there is no intention to exclude any equivalents of the features herein illustrated and described, and various modifications are possible within the scope claimed in the present invention. The present invention can be embodied in many different forms. The present disclosure should be considered to provide the principle embodiments of the present invention. Those embodiments are herein described with the understanding of not intending to limit the present invention to the preferred embodiments herein described and/or illustrated. Thus, the present invention is not to be limited to those embodiments herein described. The present invention even encompasses all the embodiments including equivalent elements, modifications, deletions, combinations, improvements and/or changes, which could be recognized by a person skilled in the art based on the present disclosure. A limitation in a claim should be broadly interpreted based on terms used in the claim, and should not be limited to any of the embodiments described in the present specification or during prosecution of the present application.

## Claims

1. A saddle-riding type vehicle (1), comprising:
a head pipe (11);
a front fork device (3) including a front fork portion (9) and a front wheel (5), the front fork portion (9) being turnably supported by the head pipe (11), the front wheel (5) being supported by the front fork portion (9);
a front cover (32) being disposed in front of the head pipe (11) and being disposed over the front wheel (5);
a left side cover (38) downwardly extending from the front cover (32) and being disposed leftward of the front wheel (5) in a vehicle front view;
a right side cover (39) downwardly extending from the front cover (32) and being disposed rightward of the front wheel (5) in the vehicle front view;
a headlamp (41) being mounted to the front cover (32);
a left lamp (57) being disposed leftward of at least a portion of the headlamp (41) in the vehicle front view and being at least partially disposed lower than a lower end of the headlamp (41); and
a right lamp (58) being disposed rightward of at least a portion of the headlamp (41) in the vehicle front view and being at least partially disposed lower than the lower end of the headlamp (41), wherein
the headlamp (41) includes a headlamp light source (42a, 42b, 42c) and a headlamp cover (43) enabling a light ray emitted from the headlamp light source (42a, 42b, 42c) to pass therethrough,
the left lamp (57) includes a left lamp light source (61) and a left lamp cover (62) enabling a light ray emitted from the left lamp light source (61) to pass therethrough,
the right lamp (58) includes a right lamp light source (64) and a right lamp cover (65) enabling a light ray emitted from the right lamp light source (64) to pass therethrough,
the front cover (32) includes a headlamp opening (44) exposing the headlamp cover (43) therethrough,
the front cover (32), the left side cover (38) and the right side cover (39) produce a space (S3) for rotating of the front fork device (3),
**characterized in that**
an inner lateral portion (623) of the left lamp cover (62) and an inner lateral portion (653) of the right lamp cover (65) are exposed to the space (S3) for rotating of the front fork device (3),
a lower edge portion (47) of the headlamp cover (43) is disposed rearward of a front edge of a lower edge portion (48) of the headlamp opening (44),
the lower edge portion (48) of the headlamp opening (44) is visible between the right lamp cover (65) and the headlamp cover (43) in a view from a first viewpoint, the first viewpoint being defined as a viewpoint located leftward of a vehicle center in a vehicle width direction and being located forward of and higher than the headlamp (41) and the right lamp (58), and
the lower edge portion (48) of the headlamp opening (44) is visible between the left lamp cover (62) and the headlamp cover (43) in a view from a second viewpoint, the second viewpoint being defined as a viewpoint located rightward of a vehicle center in the vehicle width direction and being located forward of and higher than the headlamp (41) and the left lamp (57).

2. The saddle-riding type vehicle (1) according to claim 1, wherein the right lamp cover (65) and the headlamp cover (43) are divided through the lower edge portion (48) of the headlamp opening (44) in the view from the first viewpoint, and the left lamp cover (62) and the headlamp cover (43) are divided through the lower edge portion (48) of the headlamp opening (44) in the view from the second viewpoint.

3. The saddle-riding type vehicle (1) according to claim 1 or 2, wherein a vehicle up-and-down directional dimension (H62) of the left lamp cover (62) is larger than a vehicle width directional dimension (W62) of the left lamp cover (62) in the vehicle front view, and a vehicle up-and-down directional dimension (H65) of the right lamp cover (65) is larger than a vehicle width directional dimension (W65) of the right lamp cover (65) in the vehicle front view.

4. The saddle-riding type vehicle (1) according to any of claims 1 to 3, wherein the lower edge portion (48) of the headlamp opening (44) includes a left lower edge portion (480) extending upward and leftward in the vehicle front view, and a right lower edge portion (481) extending upward and rightward in the vehicle front view, the right lower edge portion (481) is visible between the right lamp cover (65) and the headlamp cover (43) in the view from the first viewpoint, and the left lower edge portion (480) is visible between the left lamp cover (62) and the headlamp cover (43) in the view from the second viewpoint.

5. The saddle-riding type vehicle (1) according to claim 4, wherein the front cover (32) includes a left recess (51) being located under the left lower edge portion (480), and a right recess (52) being located under the right lower edge portion (481).

6. The saddle-riding type vehicle (1) according to any of claims 1 to 5, wherein the left lamp cover (62) includes a left lamp cover upper portion (621) and a left lamp cover lower portion (622) downwardly extending from the left lamp cover upper portion (621), and the right lamp cover (65) includes a right lamp cover upper portion (651) and a right lamp cover lower portion (652) downwardly extending from the right lamp cover upper portion (651).

7. The saddle-riding type vehicle (1) according to claim 6, wherein the lower edge portion (48) of the headlamp opening (44) overlaps with a portion of the right lamp cover lower portion (652) in the view from the first viewpoint, and the lower edge portion (48) of the headlamp opening (44) overlaps with a portion of the left lamp cover lower portion (622) in the view from the second viewpoint.

8. The saddle-riding type vehicle (1) according to any of claims 1 to 7, wherein the lower edge portion (48) of the headlamp opening (44) overlaps with at least a portion of the inner lateral portion (653) of the right lamp cover (65) in the view from the first viewpoint, and the lower edge portion (48) of the headlamp opening (44) overlaps with at least a portion of the inner lateral portion (623) of the left lamp cover (62) in the view from the second viewpoint.

9. The saddle-riding type vehicle (1) according to any of claims 1 to 8, wherein the headlamp cover (43) includes a headlamp cover upper portion (431), and a headlamp cover lower portion (432) having a width (W432) smaller than a width (W431) of the headlamp cover upper portion (431) in the vehicle front view.

10. The saddle-riding type vehicle (1) according to claim 9, wherein an upper end of the left lamp cover (62) and an upper end of the right lamp cover (65) are disposed higher than a lower end of the headlamp cover lower portion (432) in the vehicle front view.

11. The saddle-riding type vehicle (1) according to any one of claims 1 to 10, wherein the headlamp light source (42a, 42b, 42c) includes a first light source (42a), a second light source (42b) and a third light source (42c).

12. The saddle-riding type vehicle (1) according to claim 11, when dependent upon either claim 9 or 10, wherein the first light source (42a) and the second light source (42b) are disposed so as to face to a first space (S1) produced rearward of the headlamp cover upper portion (431), and the third light source (42c) is disposed so as to face to a second space (S2) produced rearward of the headlamp cover lower portion (432).

13. The saddle-riding type vehicle (1) according to claim 12, wherein the headlamp (41) includes a substrate (54) dividing the first space (S1) and the second space (S2), the first light source (42a) and the second light source (42b) are attached to an upper surface of the substrate (54), and the third light source (42c) is attached to a lower surface of the substrate (54).

## Patentansprüche

1. Ein Sattelfahrzeugtyp (1), aufweisend:
ein Steuerrohr (11),
eine Vordergabelvorrichtung (3) inklusive eines Vordergabelabschnitts (9) und ein Vorderrad (5), der Vordergabelabschnitt (9) ist durch das Steuerrohr (11) drehbar unterstützt, das Vorderrad (5) ist von dem Vordergabelabschnitt (9) unterstützt,
eine Vorderabdeckung (32), die vor dem Steuerrohr (11) vorgesehen ist und oberhalb des Vorderrads (5) angeordnet ist,
eine linke Seitenabdeckung (38), die sich von der Vorderabdeckung (32) nach unten erstreckt und linksseitig des Vorderrads (5) in einer Fahrzeugvorderansicht angeordnet ist,
eine rechte Seitenabdeckung (39), die sich von der Vorderabdeckung (32) nach unten erstreckt und rechtsseitig des Vorderrads (5) in der Fahrzeugvorderansicht angeordnet ist,
eine Stirnlampe (41), die an der Vorderabdeckung (32) montiert ist,
eine linke Lampe (57), die linksseitig von zumindest einem Abschnitt der Stirnlampe (41) in der Fahrzeugvorderansicht angeordnet ist und zumindest teilweise niedriger angeordnet ist als ein unteres Ende der Stirnlampe (41), und
eine rechte Lampe (58), die rechtsseitig von zumindest einem Abschnitt der Stirnlampe (41) in der Fahrzeugvorderansicht angeordnet ist und zumindest teilweise niedriger angeordnet ist als das untere Ende der Stirnlampe (41), wobei
die Stirnlampe (41) eine Stirnlampenlichtquelle (42a, 42b, 42c) und einer StirnlampenAbdeckung (43) beinhaltet, die einen von der Stirnlampenlichtquelle (42a, 42b, 42c) ausgesendeten Lichtstrahl hindurchlässt,
die linke Lampe (57) beinhaltet eine linke Lampenlichtquelle (61) und eine linke Lampenabdeckung (62), die einen von der linken Lampenlichtquelle (61) ausgegeben Lichtstrahl hindurch passieren lässt, die rechte Lampe (58) beinhaltet eine rechte Lampenlichtquelle (64) und eine rechte Lampenabdeckung (65), die einen von der rechten Lampenlichtquelle (64) ausgegebenen Lichtstrahl hindurch passieren lässt,
die Vorderabdeckung (32) beinhaltet eine Stirnlampenöffnung (44), die die StirnlampenAbdeckung (43) hindurch freilegt, die Vorderabdeckung (32), die linke Seitenabdeckung (38) und die rechte Seitenabdeckung (39) bilden einen Raum (S3) zum Drehen der Vordergabelvorrichtung (3),
**dadurch gekennzeichnet, dass**
ein innerer Seitenabschnitt (623) der linken Lampenabdeckung (62) und ein innerer Seitenabschnitt (653) der rechten Lampenabdeckung (65) zum Raum (S3) frei liegen zum Drehen der Vordergabelvorrichtung (3),
ein unterer Kantenabschnitt (47) der Stirnlampenabdeckung (43) ist hinter einer vorderen Kante eines unteren Kantenabschnitts (48) der Stirnlampenöffnung (44) vorgesehen,
der untere Kantenabschnitt (48) der Stirnlampenöffnung (44) ist zwischen der rechten Lampenabdeckung (65) und der Stirnlampenabdeckung (43) von einer Ansicht von einem ersten Blickpunkt sichtbar, der erste Blickpunkt ist als ein Blickpunkt links von einem Fahrzeugzentrum in einer Fahrzeugbreitenrichtung definiert und ist vorderhalb und höher als die Stirnlampe (41) und die rechte Lampe (58) positioniert, und
der untere Kantenabschnitt (48) der Stirnlampenöffnung (44) ist zwischen der linken Lampenabdeckung (62) und der Stirnlampenabdeckung (43) von einer Ansicht von einem zweiten Blickpunkt sichtbar, der zweite Blickpunkt ist als ein Blickpunkt rechts von einem Fahrzeugzentrum in der Fahrzeugbreitenrichtung definiert und vorderhalb und höher als die Stirnlampe (41) und die linke Lampe (57) positioniert.

2. Der Sattelfahrzeugtyp (1) gemäß Anspruch 1, wobei die rechte Lampenabdeckung (65) und die Stirnlampenabdeckung (43) durch den unteren Kantenabschnitt (48) der Stirnlampenöffnung (44) von einer Ansicht des ersten Blickpunkts geteilt sind, und die linke Lampenabdeckung (62) und die Stirnlampenabdeckung (43) sind durch den unteren Kantenabschnitt (48) der Stirnlampenöffnung (44) in der Ansicht vom zweiten Blickpunkt geteilt.

3. Der Sattelfahrzeugtyp (1) gemäß Anspruch 1 oder 2, wobei eine Fahrzeug-Oben- und Unten-Richtungsabmessung (H62) der linken Lampenabdeckung (62) größer ist als eine Fahrzeugbreitenrichtungsabmessung (W62) der linken Lampenabdeckung (62) in der Fahrzeugvorderansicht, und eine Fahrzeug-Oben- und Unten-Richtungsabmessung (H65) der rechten Lampenabdeckung (65) größer ist als eine Fahrzeugbreitenrichtungsabmessung (W65) der rechten Lampenabdeckung (65) in der Fahrzeugvorderansicht.

4. Der Sattelfahrzeugtyp (1) gemäß einem der Ansprüche 1 bis 3, wobei der untere Kantenabschnitt (48) der Stirnlampenöffnung (44) einen linken unteren Kantenabschnitt (480) beinhaltet, der sich nach oben und nach links in der Fahrzeugvorderansicht erstreckt, und einen rechten unteren Kantenabschnitt (481) der sich nach oben und nach rechts in der Fahrzeugvorderansicht erstreckt, der rechte untere Kantenabschnitt (481) ist zwischen der rechten Lampenabdeckung (65) und der Stirnlampenabdeckung (43) in der Ansicht von dem ersten Blickpunkt sichtbar, und der linke untere Kantenabschnitt (480) ist zwischen der linken Lampenabdeckung (62) und der Stirnlampenabdeckung (43) in der Ansicht von dem zweiten Blickpunkt sichtbar.

5. Der Sattelfahrzeugtyp (1) gemäß Anspruch 4, wobei die Vorderabdeckung (32) eine linke Vertiefung (51) beinhaltet, die unterhalb des linken unteren Kantenabschnitts (480) vorgesehen ist, und eine rechte Vertiefung (52) die unterhalb des rechten unteren Kantenabschnitts (481) vorgesehen ist.

6. Der Sattelfahrzeugtyp (1) gemäß einem der Ansprüche 1 bis 5, wobei die linke Lampenabdeckung (62) einen Linkelampenoberabdeckungsabschnitt (621) besitzt und einen Linkelampenunterabdeckungsabschnitt (622) der sich von dem Linkelampenoberabdeckungsabschnitt (621) nach unten erstreckt, und die rechte Lampenabdeckung (65) beinhaltet einen Rechtelampenoberabdeckungsabschnitt (651) und einen Rechtelampenunterabdeckungsabschnitt (652), der sich von dem Rechtelampenoberabdeckungsabschnitt (651) nach unten erstreckt.

7. Der Sattelfahrzeugtyp (1) gemäß Anspruch 6, wobei der untere Kantenabschnitt (48) der Stirnlampenöffnung (44) sich mit einem Abschnitt des Rechtelampenunterabdeckungsabschnitts (652) in einer Ansicht von dem ersten Blickpunkt überlappt, und der untere Kantenabschnitt (48) der Stirnlampenöffnung (44) sich mit einem Abschnitt des Linkelampenunterabdeckungsabschnitts (622) in der Ansicht von dem zweiten Blickpunkt überlappt.

8. Der Sattelfahrzeugtyp (1) gemäß einem der Ansprüche 1 bis 7, wobei der untere Kantenabschnitt (48) der Stirnlampenöffnung (44) sich mit zumindest einem Abschnitt des inneren Seitenabschnitts (653) der rechten Lampenabdeckung (65) in der Ansicht von dem ersten Blickpunkt überlappt, und der untere Kantenabschnitt (48) der Stirnlampenöffnung (44) sich mit zumindest einem Abschnitt des inneren Seitenabschnitts (623) der linken Lampenabdeckung (62) von der Ansicht von dem zweiten Blickpunkt überlappt.

9. Der Sattelfahrzeugtyp (1) gemäß einem der Ansprüche 1 bis 8, wobei die Stirnlampenabdeckung (43) einen Stirnlampenoberabdeckungsabschnitt (431) besitzt, und einen Stirnlampenunterabdeckungsabschnitt (432) mit einer Breite (W432), die kleiner ist als eine Breite (W431) des Stirnlampenoberabdeckungsabschnitts (431) in der Fahrzeugvorderansicht.

10. Der Sattelfahrzeugtyp (1) gemäß Anspruch 9, wobei ein oberes Ende der linken Lampenabdeckung (62) und ein oberes Ende der rechten Lampenabdeckung (65) höher angeordnet sind als ein unteres Ende des Stirnlampenunterabdeckungsabschnitts (432) in der Fahrzeugvorderansicht.

11. Der Sattelfahrzeugtyp (1) gemäß einem der Ansprüche 1 bis 10, wobei die Stirnlampenlichtquelle (42a, 42b, 42c) eine erste Lichtquelle (42a), eine zweite Lichtquelle (42b) und eine dritte Lichtquelle (42c) aufweist.

12. Der Sattelfahrzeugtyp (1) gemäß Anspruch 11, entweder abhängig von Anspruch 9 oder 10, wobei die erste Lichtquelle (42a) und die zweite Lichtquelle (42b) so angeordnet sind, um einem ersten Raum (S1) gegenüberzuliegen, der sich hinter dem Stirnlampenoberabdeckungsabschnitt (431) ergibt, und die dritte Lichtquelle (42c) angeordnet ist, um gegenüber einem zweiten Raum (S2) zu liegen, der sich hinter dem Stirnlampenunterabdeckungsabschnitt (432) ergibt.

13. Der Sattelfahrzeugtyp (1) gemäß Anspruch 12, wobei die Stirnlampe (41) ein Substrat (54) beinhaltet, das den ersten Raum (S1) und den zweiten Raum (S2) teilt, die erste Lichtquelle (42a) und die zweite Lichtquelle (42b) sind an einer oberen Fläche des Substrats (54) angebracht, und die dritte Lichtquelle (42c) ist an einer unteren Oberfläche des Substrats (54) angebracht.

## Revendications

1. Véhicule du type à selle (1), comprenant :
un tube de tête (11) ;
un dispositif de fourche avant (3) comprenant une portion de fourche avant (9) et une roue avant (5), la portion de fourche avant (9) étant supportée de manière tournante par le tube de tête (11), la roue avant (5) étant supportée par la portion de fourche avant (9) ;
un carénage avant (32) agencé devant le tube de tête (11) et par-dessus la roue avant (5) ;
un carénage côté gauche (38) qui s'étend vers le bas depuis le carénage avant (32) et agencé vers la gauche de la roue avant (5) dans une vue de face du véhicule ;
un carénage côté droit (39) qui s'étend vers le bas depuis le carénage avant (32) et agencé vers la droite de la roue avant (5) dans la vue de face du véhicule ;
un phare (41) monté sur le carénage avant (32) ;
une lampe gauche (57) agencée à gauche d'au moins une portion du phare (41) dans la vue de face du véhicule et au moins partiellement agencée plus bas qu'une extrémité inférieure du phare (41) ; et
une lampe droite (58) agencée à droite d'au moins une portion du phare (41) dans la vue de face du véhicule et au moins partiellement agencée plus bas que l'extrémité inférieure du phare (41), dans lequel
le phare (41) inclut une source de lumière de phare (42a, 42b, 42c) et un carénage de phare (43) permettant à un faisceau de lumière émis par la source de lumière de phare (42a, 42b, 42c) de le traverser,
la lampe gauche (57) inclut une source de lumière de lampe gauche (61) et un carénage de lampe gauche (62) permettant à un faisceau de lumière émis par la source de lumière de lampe gauche (61) de le traverser,
la lampe droite (58) inclut une source de lumière de lampe droite (64) et un carénage de lampe droite (65) permettant à un faisceau de lumière émis par la source de lumière de lampe droite (64) de le traverser,
le carénage avant (32) inclut une ouverture de phare (44) à travers laquelle est exposé le carénage de phare (43),
le carénage avant (32), le carénage côté gauche (38) et le carénage latéral droit (39) constituent un espace (S3) pour faire tourner le dispositif de fourche avant (3),
**caractérisé en ce que**
une portion latérale interne (623) du carénage de lampe gauche (62) et une portion latérale interne (653) du carénage de lampe droite (65) sont exposées dans ledit espace (S3) pour faire tourner le dispositif de fourche avant (3),
une portion de bord inférieur (47) du carénage de phare (43) est agencée à l'arrière d'un bord avant d'une portion de bord inférieur (48) de l'ouverture de phare (44),
la portion de bord inférieur (48) de l'ouverture de phare (44) est visible entre le carénage de lampe droite (65) et le carénage du phare (43) dans une vue depuis un premier point de vue, le premier point de vue étant défini comme un point de vue situé à gauche d'un centre de véhicule dans une direction de largeur du véhicule et situé devant et plus haut que le phare (41) et la lampe droite (58), et
la portion de bord inférieur (48) de l'ouverture de phare (44) est visible entre le carénage de lampe gauche (62) et le carénage du phare (43) dans une vue depuis un deuxième point de vue, le deuxième point de vue étant défini comme un point de vue situé à droite d'un centre de véhicule dans la direction de largeur du véhicule et situé devant et plus haut que le phare (41) et la lampe gauche (57).

2. Véhicule du type à selle (1) selon la revendication 1, dans lequel le carénage de lampe droite (65) et le carénage de phare (43) sont divisés par la portion de bord inférieur (48) de l'ouverture de phare (44) dans la vue depuis le premier point de vue, et le carénage de lampe gauche (62) et le carénage de phare (43) sont divisés par la portion de bord inférieur (48) de l'ouverture de phare (44) dans la vue depuis le deuxième point de vue.

3. Véhicule du type à selle (1) selon la revendication 1 ou 2, dans lequel une dimension en direction haut-bas du véhicule (H62) du carénage de lampe gauche (62) est supérieure à une dimension en direction de la largeur du véhicule (W62) du carénage de lampe gauche (62) en vue de face du véhicule, et une dimension en direction haut-bas du véhicule (H65) du carénage de lampe droite (65) est supérieure à une dimension en direction de la largeur du véhicule (W65) du carénage de lampe droite (65) en vue de face du véhicule.

4. Véhicule du type à selle (1) selon l'une quelconque des revendications 1 à 3, dans lequel la portion de bord inférieur (48) de l'ouverture de phare (44) comprend une portion de bord inférieur gauche (480) qui s'étend vers le haut et vers la gauche dans la vue de face du véhicule, et une portion de bord inférieur droit (481) qui s'étend vers le haut et vers la droite dans la vue de face du véhicule, la portion de bord inférieur droit (481) est visible entre le carénage de lampe droite (65) et le carénage du phare (43) dans la vue depuis le premier point de vue, et la portion de bord inférieur gauche (480) est visible entre le carénage de lampe gauche (62) et le carénage du phare (43) dans la vue depuis le deuxième point de vue.

5. Véhicule du type à selle (1) selon la revendication 4, dans lequel le carénage avant (32) comprend un évidement gauche (51) situé en dessous de la portion de bord inférieur gauche (480), et un évidement droit (52) situé au-dessous de la portion de bord inférieur droit (481).

6. Véhicule du type à selle (1) selon l'une quelconque des revendications 1 à 5, dans lequel le carénage de lampe gauche (62) comprend une portion supérieure de carénage de lampe gauche (621) et une portion inférieure de carénage de lampe gauche (622) qui s'étend vers le bas depuis la portion supérieure de carénage de lampe gauche (621), et le carénage de lampe droite (65) comprend une portion supérieure de carénage de lampe droite (651) et une portion inférieure de carénage de lampe droite (652) qui s'étend vers le bas depuis la portion supérieure de carénage de lampe droite (651).

7. Véhicule du type à selle (1) selon la revendication 6, dans lequel la portion de bord inférieur (48) de l'ouverture de phare (44) présente un chevauchement avec une portion de la portion inférieure du carénage de lampe droite (652) dans la vue depuis le premier point de vue, et la portion de bord inférieur (48) de l'ouverture de phare (44) présente un chevauchement avec une portion de la portion inférieure du carénage de lampe gauche (622) dans la vue depuis le deuxième point de vue.

8. Véhicule du type à selle (1) selon l'une quelconque des revendications 1 à 7, dans lequel la portion de bord inférieur (48) de l'ouverture de phare (44) présente un chevauchement avec au moins une portion de la portion latérale interne (653) du carénage de lampe droite (65) dans la vue depuis le premier point de vue, et la portion de bord inférieur (48) de l'ouverture de phare (44) présente un chevauchement avec au moins une portion de la portion latérale interne (623) du carénage de lampe gauche (62) dans la vue depuis le deuxième point de vue.

9. Véhicule du type à selle (1) selon l'une quelconque des revendications 1 à 8, dans lequel le carénage de phare (43) comprend une portion supérieure du carénage de phare (431), et une portion inférieure de carénage du phare (432) ayant une largeur (W432) inférieure à une largeur (W431) de la portion supérieure du carénage de phare (431) dans la vue de face du véhicule.

10. Véhicule du type à selle (1) selon la revendication 9, dans lequel une extrémité supérieure du carénage de lampe gauche (62) et une extrémité supérieure du carénage de lampe droite (65) sont agencées plus haut qu'une extrémité inférieure de la portion inférieure du carénage de phare (432) dans la vue de face du véhicule.

11. Véhicule du type à selle (1) selon l'une quelconque des revendications 1 à 10, dans lequel la source de lumière de phare (42a, 42b, 42c) comprend une première source de lumière (42a), une deuxième source de lumière (42b) et une troisième source de lumière (42c).

12. Véhicule du type à selle (1) selon la revendication 11, lorsqu'elle dépend soit de la revendication 9, soit de la revendication 10, dans lequel la première source de lumière (42a) et la deuxième source de lumière (42b) sont agencées de manière à faire face à un premier espace (S1) produit à l'arrière de la portion supérieure du carénage de phare (431), et la troisième source de lumière (42c) est agencée de manière à faire face à un deuxième espace (S2) produit à l'arrière de la portion inférieure du carénage de phare (432).

13. Véhicule du type à selle (1) selon la revendication 12, dans lequel le phare (41) comprend un substrat (54) qui divise le premier espace (S1) et le deuxième espace (S2), la première source de lumière (42a) et la deuxième source de lumière (42b) sont attachées à une surface supérieure du substrat (54), et la troisième source de lumière (42c) est attachée à une surface inférieure du substrat (54).
